# EUROPEAN PATENT SPECIFICATION

(11) **EP 4 068 282 B1**
(45) Date of publication and mention of the grant of the patent: **24.06.2026**
(21) Application number: 19958182.8
(22) Date of filing: 31.12.2019
(51) Int. Cl.: G10L 17/00, G10L 17/14, G10L 15/00, G10L 15/26, G10L 15/22, H04N 7/15, H04M 3/56

(54) **METHOD FOR PROCESSING CONFERENCE DATA AND RELATED DEVICE**
VERFAHREN ZUR VERARBEITUNG VON KONFERENZDATEN UND ZUGEHÖRIGE VORRICHTUNG
PROCÉDÉ POUR TRAITER DES DONNÉES DE CONFÉRENCE ET DISPOSITIF ASSOCIÉ

(43) Date of publication of application: 05.10.2022
(73) Proprietor: Huawei Technologies Co., Ltd., Shenzhen, Guangdong 518129, (CN)
(72) Inventor: LIU, Zhihui, Shenzhen, Guangdong 518129 (CN)
(74) Representative: Grünecker Patent- und Rechtsanwälte PartG mbB
(86) International application number: PCT/CN2019/130978
(87) International publication number: WO 2021/134720

(56) References cited:
- CN-A- 102 572 372
- CN-A- 102 968 991
- CN-A- 108 922 538
- CN-A- 109 388 701
- CN-A- 110 232 925
- US-A1- 2019 341 050
- US-B1- 7 117 157

## Description

### TECHNICAL FIELD

The present invention relates to the field of computer technologies, and in particular, to a conference data processing method and a related device.

### BACKGROUND

Regardless of a remote conference or a local conference, statement information in a conference process usually needs to be arranged. During the arrangement, each statement (which may be speech content, text content, a statement time period, or the like) needs to correspond to a corresponding speaker. For example, the statement is a statement text. The following describes a form of a correspondence between a statement text and a speaker by using an example.

Zhang San: Sales of this month are not good. Let's analyze the cause of the problem.

Li Si: Now, it is the conventional off-season. In addition, the promotion of competitors is stronger. As a result, the market share is preempted by the competitors.

Wang Wu: In my opinion, the competitiveness of our products has declined, and several market problems have arisen. As a result, customers refuse to buy our products.

Zhang San: I also interviewed several customers and several sales people.

It can be learned that, in a process of arranging statement information, a speaker corresponding to each part in a conference audio needs to be determined. Currently, there is a solution in which a single conference terminal identifies a speaker corresponding to each part of the audio. However, with development of communications technologies, there is also a case in which a conference is jointly held at a plurality of places. In this case, how to accurately determine a correspondence between a statement and a speaker in a conference process is a technical problem that is being studied by a person skilled in the art.

US 2019/341050 A1 relates generally to a method of providing intelligent assistance to conference participants using a computerized intelligent assistant.

### SUMMARY

Embodiments of the present invention disclose a conference data processing method and a related device, to more accurately determine a correspondence between a statement and a speaker in a conference process. The invention is defined according to the independent claims. The dependent claims recite advantageous embodiments.

### BRIEF DESCRIPTION OF DRAWINGS

FIG. 1 is a schematic diagram of an architecture of a conference system according to an embodiment of the present invention;
FIG. 2 is a schematic flowchart of a conference information processing method according to an embodiment of the present invention;
FIG. 3 is a schematic flowchart of a conference information processing method according to an embodiment of the present invention;
FIG. 4 is a schematic flowchart of a conference information processing method according to an embodiment of the present invention;
FIG. 5A is a schematic flowchart of voiceprint registration according to an embodiment of the present invention;
FIG. 5B is a schematic diagram of a display interface according to an embodiment of the present invention;
FIG. 6 is a schematic flowchart of performing processing by a conference information processing device according to an embodiment of the present invention;
FIG. 7 is a schematic flowchart of processing a conference audio and first additional information according to an embodiment of the present invention;
FIG. 8 is a schematic flowchart of performing voiceprint recognition and determining a speaker according to an embodiment of the present invention;
FIG. 9 is a schematic flowchart of voiceprint recognition according to an embodiment of the present invention;
FIG. 10 is a schematic diagram of an ideal conference architecture according to an embodiment of the present invention;
FIG. 11 is a schematic diagram of a structure of a conference information processing apparatus according to an embodiment of the present invention;
FIG. 12 is a schematic diagram of a structure of a conference information processing apparatus according to an embodiment of the present invention;
FIG. 13 is a schematic diagram of a structure of a conference information processing apparatus according to an embodiment of the present invention;
FIG. 14 is a schematic diagram of a structure of a conference terminal according to an embodiment of the present invention;
FIG. 15 is a schematic diagram of a structure of a conference terminal according to an embodiment of the present invention; and
FIG. 16 is a schematic diagram of a structure of a conference information processing device according to an embodiment of the present invention.

### DESCRIPTION OF EMBODIMENTS

The following describes the embodiments of the present invention with reference to the accompanying drawings in the embodiments of the present invention.

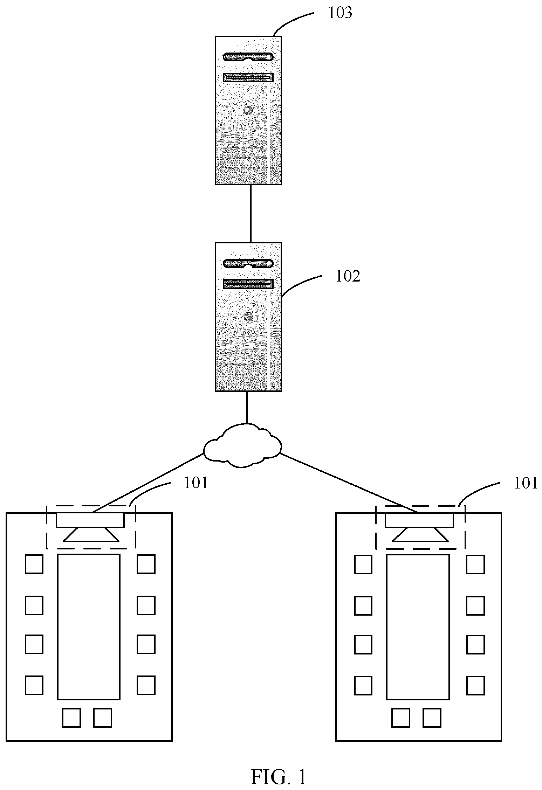

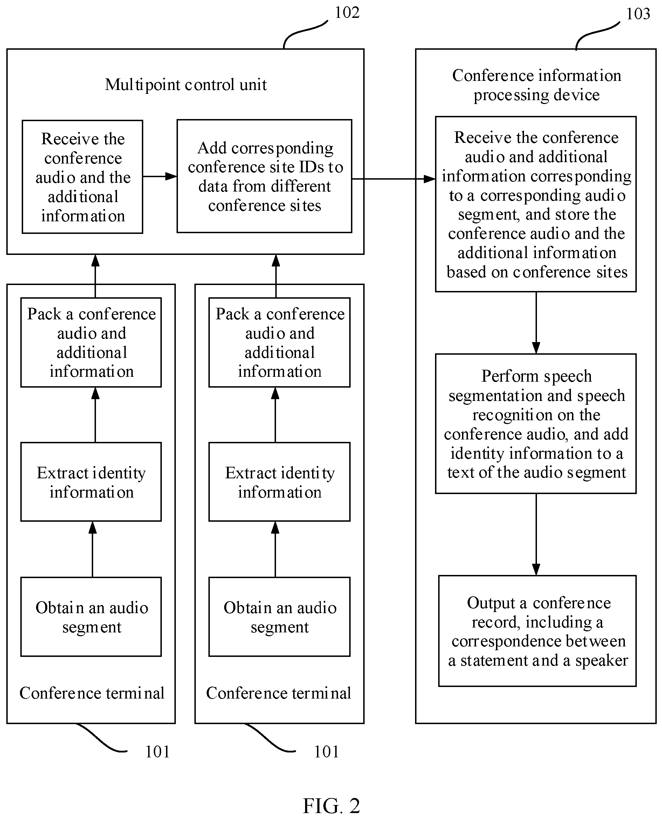

FIG. 1 is a schematic diagram of an architecture of a conference system according to an embodiment of the present invention. The conference system includes a conference terminal 101, a multipoint control unit 102, and a conference information processing device 103. FIG. 2 is a schematic flowchart of a conference information processing method according to an embodiment of this application. The method is jointly completed by the conference terminal 101, the multipoint control unit 102, and the conference information processing device 103 shown in FIG. 1, and includes the following procedure.

The conference terminal 101 is a device having a computing capability, and a specific form of the conference terminal 101 is not limited herein. There may be one or more conference terminals 101. When there are a plurality of conference terminals 101, the plurality of conference terminals 101 may be deployed in different conference sites. For example, a company has business departments in Beijing, Shenzhen, and Wuhan, and therefore conference terminals 101 may be deployed in the business departments in Beijing, Shenzhen, and Wuhan respectively. When the company expects to hold a business conference, the three business departments are three conference sites, and the conference terminals 101 in the three conference sites may be enabled, to respectively collect speech statuses of participants in the three conference sites in a conference process. Optionally, the conference terminal 101 may be a terminal on which a corresponding collection component (such as a camera or a microphone) is installed, and therefore can collect information. Optionally, the conference terminal 101 may further collect information by externally connecting to a collection component. For example, a director camera is configured in a conference site in which the conference terminal 101 is located. The director camera includes an array microphone configured to perform sound source localization and record a voice of a speaker, and further includes one or more cameras configured to obtain video data in the conference site to obtain video data used for facial recognition.

The conference terminal 101 (two conference terminals are used as an example in FIG. 2) joins a conference. The conference terminal 101 collects an audio segment or segments a recorded conference audio (for example, segments the recorded conference audio based on sound source direction information) to obtain audio segments, extracts identity information corresponding to the audio segment, and then packs the locally collected conference audio and the extracted related information (which may be referred to as additional information) and sends the locally collected conference audio and the extracted related information to the multipoint control unit 102 (for example, may be a microcontroller unit (MCU), where the MCU is mainly used as an example for subsequent description). Optionally, when extracting related information, the conference terminal 101 may use technologies such as sound source localization, facial recognition, voiceprint recognition, and speech switching detection. The extracted related information may be first stored locally in the conference terminal 101, and sent to the multipoint control unit 102 after the conference ends.

The multipoint control unit 102 receives a conference audio and additional information that are sent by the conference terminal 101 in each conference site, respectively adds corresponding conference site IDs and corresponding timestamps to data from different conference sites, and then sends the data to the conference information processing device 103. Optionally, the multipoint control unit 102 may further generate a multipicture conference site of a plurality of conference sites. In addition, the conference information processing device 103 may be a single device having a data processing function, or a cluster of a plurality of devices, for example, a server cluster.

The conference information processing device 103 receives the conference audio and the corresponding additional information that are sent by the multipoint control unit 102, and stores the conference audio and the corresponding additional information based on conference sites, to ensure that the data from the different conference sites is not mixed together. After the conference, speech segmentation is performed based on the conference audio and the additional information, and a statement in the conference audio is matched with a corresponding speaker. The statement herein may be a statement text, a statement speech, statement duration, or the like.

It should be noted that the multipoint control unit 102 may be deployed independently of the conference information processing device 103, or may be deployed in the conference information processing device 103. When the multipoint control unit 102 is deployed in the conference information processing device 103, the conference information processing device 103 and the multipoint control unit 102 mentioned above may implement some sending and receiving operations by using a signal or instructions inside the device. In subsequent related descriptions, the conference terminal 101 sends information to the conference information processing device 103. Therefore, when the multipoint control unit 102 is deployed independently of the conference information processing device 103, the information is first sent by the conference terminal 101 to the multipoint control unit 102, and then forwarded by the multipoint control unit 102 to the conference information processing device (some processing of the information may be involved in this process). Certainly, the information may also need to be forwarded by another node in a transmission process. Therefore, when the multipoint control unit 102 is deployed in the conference information processing device 103, the information may be directly sent by the conference terminal 101 to the conference information processing device 103, or may be forwarded by another node and then sent to the conference information processing device 103.

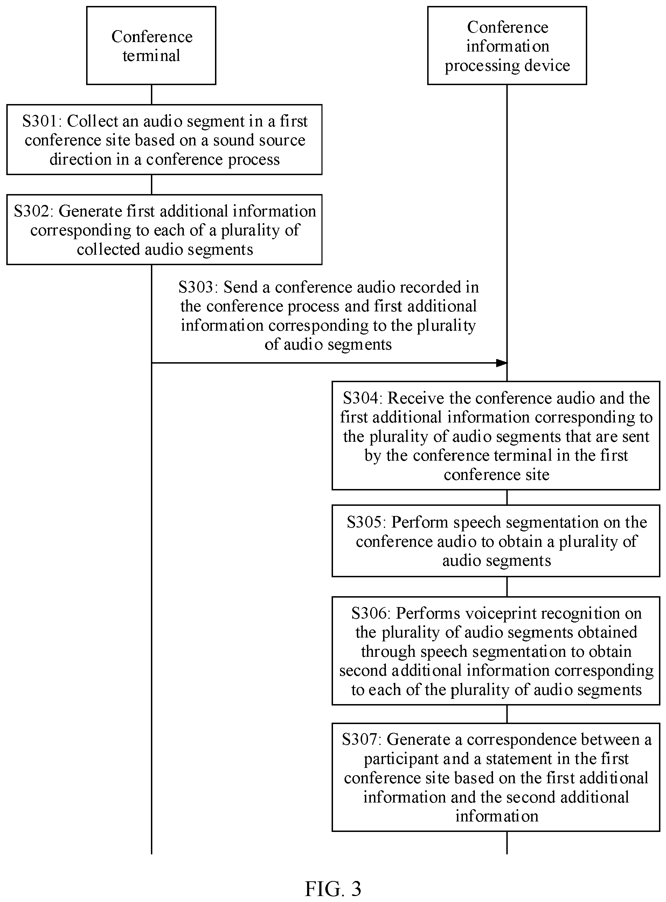

FIG. 3 is a schematic flowchart of a conference information processing method according to an embodiment of the present invention. The method may be considered as expanded descriptions of the method shown in FIG. 2. The method includes but is not limited to the following steps.

Step S301: A conference terminal collects an audio segment in a first conference site based on a sound source direction in a conference process.

Specifically, a conference may be a conference jointly held in a plurality of conference sites or a conference in a single conference site. When the conference is the conference jointly held in the plurality of conference sites, the first conference site herein is one of the plurality of conference sites. For a processing manner of information in another conference site, refer to descriptions in the first conference site. When the conference is the conference in the single conference site, the first conference site herein is the single conference site.

In this embodiment of this application, sound source directions of two audio segments that are adjacent in a time sequence are different. In a specific implementation, the conference terminal may continuously detect the sound source direction in the conference process (for example, may detect the sound source direction based on a preset frequency). When the sound source direction changes, the conference terminal starts to collect a next audio segment. For example, an audio direction in a conference period from the 0^{th} minute to the 6^{th} minute is a direction 1, an audio direction in a conference period from the 6^{th} minute to the 10^{th} minute is a direction 2, and an audio direction in a conference period from the 10^{th} minute to the 15^{th} minute is a direction 3. Therefore, the conference terminal collects an audio from the 0^{th} minute to the 6^{th} minute and uses the audio as an audio segment, collects an audio from the 6^{th} minute to the 10^{th} minute and uses the audio as an audio segment, and collects an audio from the 10^{th} minute to the 15^{th} minute and uses the audio as an audio segment. It may be understood that a plurality of audio segments may be collected in this manner.

It should be noted that the audio segment may not be collected in real time, but after a conference audio is recorded, the conference audio is segmented based on a sound source in the conference audio to obtain a plurality of audio segments, where sound source directions of two audio segments that are adjacent in a time sequence in the plurality of audio segments are different.

It should be noted that, a facial image is also collected in a process of collecting the audio segment and recording the conference audio. For example, in the conference process, a facial image is captured in a sound source direction provided that a person speaks.

Step S302: The conference terminal generates first additional information corresponding to each of a plurality of collected audio segments.

Specifically, the conference terminal may uniformly generate, after collecting (or obtaining through segmentation) a plurality of audio segments, first additional information corresponding to each of the audio segments, may generate, each time collecting an audio segment (or when collecting the audio segment), first additional information corresponding to the audio segment, or may configure another generation occasion. The first additional information corresponding to each audio segment includes information used to determine a speaker identity corresponding to the audio segment and identification information of the corresponding audio segment.

In this embodiment of this application, different audio segments correspond to different identification information. Optionally, the identification information may be a timestamp, and a timestamp corresponding to each audio segment includes a start time point and an end time point of the audio segment. Optionally, the identification information may also be generated according to a preset rule. Therefore, a conference information processing device may also process a corresponding identifier according to the preset rule, to determine which segment in a conference is an audio segment identified by the identification information.

In this embodiment of this application, the information that is included in the first additional information and that is used to determine the speaker identity corresponding to the audio segment may be a facial recognition result or a recognition result of another biometric feature.

In Manner 1, a conference system further includes a facial feature library, and the facial feature library includes facial features; and that the conference terminal generates first additional information corresponding to each of a plurality of collected audio segments (or obtained through segmentation) includes: performing facial recognition on a target image based on the facial feature library, where the target image is a facial image that is in a sound source direction of a first audio segment and that is captured in a process of recording the first audio segment, and the first audio segment is one of the plurality of audio segments, that is, in a process of collecting each audio segment, the facial image in the sound source direction is collected by using a director camera (or a camera or a camera module); and then generating first additional information corresponding to the first audio segment, where the first additional information corresponding to the first audio segment includes a recognition result of the facial recognition and identification information (for example, a timestamp) of the first audio segment. Herein, the recognition result of the facial recognition includes at least one of a face identifier (ID) and a face identity corresponding to the face identifier, where the face identifier is used to identify a facial feature, and face identifiers are different if facial features are different. It may be understood that when a face identifier (ID) is different from another face identifier (ID), it indicates that a face identity corresponding to the face identifier (ID) is different from a face identity corresponding to the another face identifier, but a specific face identity corresponding to the face identifier cannot be determined. Optionally, the face identity may be a name such as Zhang San or Li Si. Certainly, the face identifier may not be identified based on the facial image captured in the process of collecting the first audio segment. In this case, the recognition result may be null, or may be filled with other information.

It may be understood that, herein, for ease of description, the first audio segment is specially used as an example for description. A manner of generating first additional information corresponding to another audio segment may be the same as a manner of generating the first additional information corresponding to the first audio segment. The following describes a representation form of the first additional information by using Table 1 as an example.

**Table 1**

| Audio segment | Timestamp (second:millisecond) | Face ID | Face identity |
|---|---|---|---|
| S1 | Start 00:000 | F_ID_1 | Zhang San |
| | End 00:200 | F_ID_3 | Liu Liu |
| S2 | Start 00:200 | F_ID_2 | Li Si |
| | End 00:221 | | |
| S3 | Start 00:221 | F_ID_1 | Zhang San |
| | End 00:333 | | |
| S4 | Start 00:333 | Null | Null |
| | End 00:350 | | |
| S5 | Start 00:350 | F_ID_6 | Null |
| | End 01:200 | | |
| S6 | Start 01:200 | F_ID_5 | Wang Wu |
| | End 01:420 | | |
| ... | ... | ... | ... |
| Sn | Start 02:001 | F_ID_2 | Li Si |
| | End 02:200 | | |

In Manner 2, the conference system further includes a first voiceprint feature library, and the first voiceprint feature library includes voiceprint features; and that the conference terminal generates first additional information corresponding to each of a plurality of collected audio segments includes: determining a voiceprint feature of a first audio segment, and searching the first voiceprint feature library for the voiceprint feature of the first audio segment based on the determined voiceprint feature of the first audio segment, where the first audio segment is one of the plurality of audio segments; and generating first additional information corresponding to the first audio segment, where the first additional information corresponding to the first audio segment includes a matching result of the voiceprint matching and identification information (for example, a timestamp) of the first audio segment. Herein, the matching result of the voiceprint matching includes a voiceprint identifier (ID). Certainly, the voiceprint identifier (ID) may not be found for the first audio segment. In this case, the recognition result may be null, or may be filled with other information. The voiceprint ID is used to identify a voiceprint feature. It may be understood that usually, if voiceprint features are different, voiceprint identities corresponding to the voiceprint features are also different. Correspondingly, if voiceprint IDs are different, voiceprint identities corresponding to the voiceprint IDs are also different. It may be understood that, herein, for ease of description, the first audio segment is specially used as an example for description. A manner of generating first additional information corresponding to another audio segment may be the same as a manner of generating the first additional information corresponding to the first audio segment. The following describes a representation form of the first additional information by using Table 2 as an example.

**Table 2**

| Audio segment | Timestamp (second:millisecond) | Voiceprint ID |
|---|---|---|
| S1 | Start 00:000 | VP_1 |
| | End 00:200 | |
| S2 | Start 00:200 | Null |
| | End 00:221 | |
| S3 | Start 00:221 | VP_1 |
| | End 00:333 | |
| S4 | Start 00:333 | VP_4 |
| | End 00:350 | |
| S5 | Start 00:350 | VP_3 |
| | End 01:200 | |
| S6 | Start 01:200 | VP_4 |
| | End 01:420 | |
| ... | ... | ... |
| Sn | Start 02:001 | VP_2 |
| | End 02:200 | |

In Manner 3, the conference system further includes a facial feature library and a first voiceprint feature library, the facial feature library includes facial features, and the first voiceprint feature library includes voiceprint features; and that the conference terminal generates first additional information corresponding to each of a plurality of collected audio segments includes: performing facial recognition on a target image based on the facial feature library, where the target image is an image that is in a sound source direction of a first audio segment and that is captured in a process of recording the first audio segment, and the first audio segment is one of the plurality of audio segments; determining a voiceprint feature of the first audio segment, and searching the first voiceprint feature library for the voiceprint feature of the first audio segment; and generating first additional information corresponding to the first audio segment, where the first additional information corresponding to the first audio segment includes a recognition result of the facial recognition, a matching result of the voiceprint matching, and identification information of the first audio segment. For a principle of Manner 3, refer to the foregoing descriptions of Manner 1 and Manner 2. Therefore, the first additional information in Manner 3 includes the information in Table 1 and the information in Table 2. Details are not separately described herein. For example, the first additional information may be a set of the information in Table 1 and Table 2.

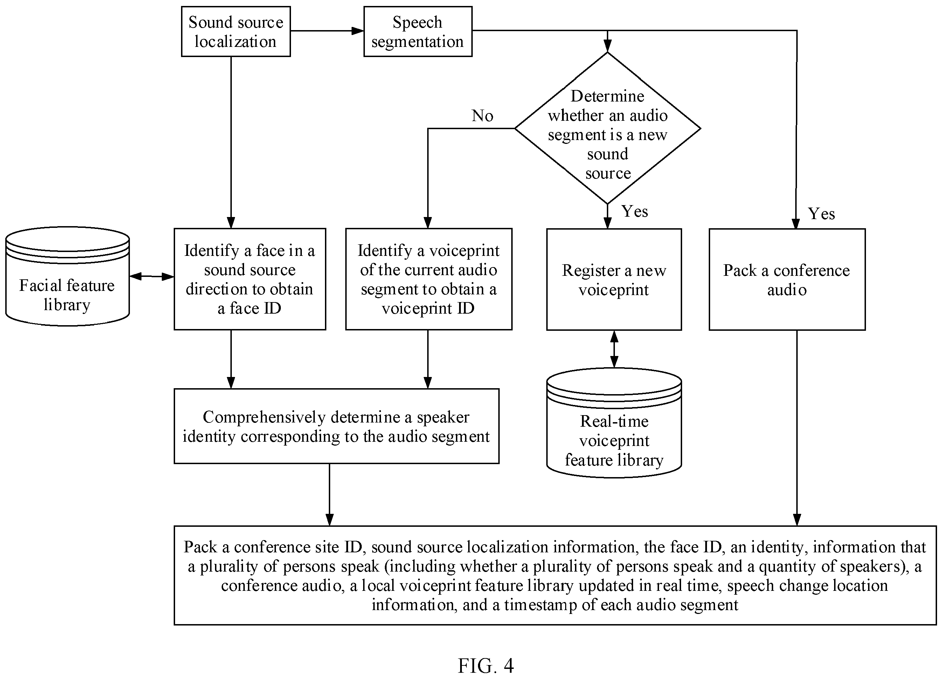

Based on the foregoing descriptions, detailed operations such as sound source localization, speech segmentation, voiceprint recognition, and facial recognition performed by the conference terminal are described below by using examples with reference to FIG. 4. The following parts are mainly included.

In Part 1, when a speaker speaks, a sound source direction is determined (that is, a direction of the speaker is determined through sound source localization), and then face information (such as a face ID) in the sound source direction is identified from a facial feature library based on the determined sound source direction (that is, a result of sound source localization) by using a facial recognition technology, to obtain a corresponding face identity.

In Part 2, the determined sound source direction is also used as a basis for speech segmentation (which may also be described as speech sectioning) (or speaker switching may be detected based on another detection means to perform speech segmentation). A voiceprint needs to be registered if an audio segment currently obtained through segmentation is a new sound source (that is, no voiceprint information is registered for a sound source direction of the audio segment. A process of identifying whether voiceprint information is registered for the sound source direction of the audio segment is a process of searching a first voiceprint feature library for a voiceprint feature of a first audio segment. If the voiceprint information is registered for the sound source direction, the voiceprint feature can be found, and the found voiceprint feature is the voiceprint information registered with the first voiceprint feature library). Therefore, the audio segment is stored in the first voiceprint feature library, to obtain, in subsequent training, a voiceprint feature corresponding to the sound source direction of the audio segment. If the voiceprint information is registered for the current sound source direction, a voiceprint of the audio segment currently obtained through segmentation is identified from the first voiceprint feature library (a local real-time voiceprint feature library), where the identified voiceprint is used to comprehensively determine a speaker identity based on a facial recognition result. For example, when two face IDs are recognized through facial recognition, one identity may be further selected, based on a voiceprint ID recognized through voiceprint recognition, from identities corresponding to the two face IDs. Because the first voiceprint feature library herein is trained and updated by adding an audio segment in a conference process to the first voiceprint feature library, recognition accuracy is higher.

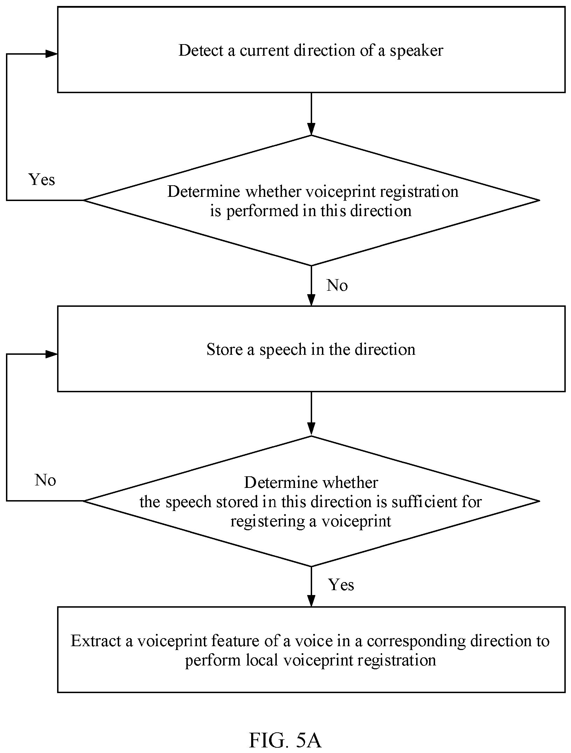

FIG. 5A shows a procedure of voiceprint registration. If no voiceprint information is registered for a sound source direction of an audio segment currently obtained through segmentation, the audio segment currently obtained through segmentation is stored, and it is determined whether a preset quantity of audio segments is accumulated in the sound source direction. If the preset quantity of audio segments is accumulated, a voiceprint feature in the sound source direction is extracted based on the accumulated audio segments, and the extracted voiceprint feature in the sound source direction is registered with a first voiceprint feature library (a newly registered voiceprint feature corresponds to a new voiceprint ID). If the preset quantity of audio segments is not accumulated, when an audio segment from the sound source direction appears subsequently, accumulation continues to be performed until the preset quantity is accumulated, and then voiceprint extraction is performed.

Optionally, the first voiceprint feature library includes a voiceprint feature obtained through training in advance based on an existing audio file (which may not be an audio recorded in a current conference). If there is a case in which confidence of a voiceprint feature of an audio segment currently obtained through segmentation in the first voiceprint feature library exceeds a specific threshold, it may be considered that a voiceprint of the audio segment currently obtained through segmentation is an existing voiceprint, that is, is registered with the first voiceprint feature library. If there is no case in which confidence of a voiceprint feature of a current audio segment in a first voiceprint feature library exceeds a specific threshold, and a deviation between a sound source direction of the audio segment currently obtained through segmentation and a sound source direction for which a voiceprint feature is registered is not less than a preset reference value, it is considered that the audio segment currently obtained through segmentation is a new sound source. Therefore, a voiceprint needs to be registered for the sound source direction of the audio segment currently obtained through segmentation.

In Part 3, usually, one person speaks in a conference, but there may be a case in which a plurality of persons speak or break in simultaneously. In this case, because a plurality of speeches are mixed together, a result of speech recognition (for example, recognition of a corresponding text) is inaccurate. According to an embodiment which is covered by the claims, a blind source separation technology is used to separate speeches, and speech recognition is performed on each mono audio obtained through separation. For example, the conference terminal sends a conference audio used for blind source separation to the conference information processing device (which may be forwarded by the MCU). The conference information processing device performs blind source separation, and performs speech recognition on each mono audio obtained through separation. When performing blind source separation, the conference information processing device first needs to know that a plurality of speakers speak simultaneously in a to-be-processed audio segment. According to an embodiment which is covered by the claims, the conference information processing device processes the to-be-processed audio segment to determine whether a plurality of speakers speak, or, in an embodiment which is not covered by the claims, the conference terminal may process the to-be-processed audio segment to determine whether a plurality of speakers speak. In a scenario in which the plurality of speakers speak, the conference terminal records an identifier indicating that the plurality of speakers speak, obtains a quantity of speakers that speak simultaneously, records mono data whose amount is not less than the quantity of speakers or mixed mono data, and sends the foregoing information to the conference information processing device. Optionally, whether the plurality of persons speak and the quantity of speakers may be determined based on a quantity of sound sources obtained through sound source localization. For example, if there are three sound sources in an audio segment, it may be determined that the plurality of persons speak, and it may be determined that the quantity of speakers is not less than 3.

In Part 4, the conference terminal combines related results of operations such as sound source localization, speech segmentation, voiceprint recognition, and facial recognition to obtain first additional information corresponding to each audio segment, so as to subsequently send the first additional information to the conference information processing device, where the first additional information may include but is not limited to one or more of the following information:
a voiceprint ID of the audio segment, used to identify a voiceprint feature of the audio segment;
a voiceprint identity of the audio segment, used to identify a human identity represented by the voiceprint feature;
a face ID of the audio segment, used to identify a facial feature of the audio segment;
a face identity of the audio segment, used to identify a human identity represented by the facial feature; identification information of the audio segment, used to identify the audio segment, where different audio segments have different identification information of the audio segments; for example, the identification information may be a timestamp of the audio segment, including a start time point and an end time point of the audio segment;
a conference site ID corresponding to the audio segment, used to identify a conference site in which the audio segment is recorded, that is, indicate a conference site from which a corresponding audio segment comes, where optionally, the conference site ID may also be added to the first additional information after the MCU identifies a conference site;
sound source direction information of the audio segment, used to identify a sound source direction of the audio segment;
a reference identifier of the audio segment, used to indicate whether a plurality of persons speak in the corresponding audio segment; for example, if the plurality of persons speak in the corresponding audio segment, the reference identifier may be 1; or if a single person speaks in the corresponding audio segment, the reference identifier may be 0;
a quantity of speakers in the audio segment; and
a quantity of mono audios included in the audio segment, used for more accurate speech-to-text conversion.
An optional representation form of the first additional information mentioned above may be shown in Table 3.

**Table 3**

| Audio segment | Timestamp (second:millisecond) | Face ID | Face identity | Voiceprint ID | Sound source direction | Identifier indicating a plurality of persons speak | Quantity of speakers | Quantity of speech channels | Conference site identifier |
|---|---|---|---|---|---|---|---|---|---|
| S1 | Start 00:000 | F_ID_1 | Zhang San | VP_1 | Dir_1 | 0 | 1 | 1 | ROOM 1 |
| | End 00:200 | F_ID_3 | Liu Liu | | | | | | |
| S2 | Start 00:200 | F_ID_2 | Li Si | Null | Dir_2 | 0 | 1 | 1 | ROOM 1 |
| | End 00:221 | | | | | | | | |
| S3 | Start 00:221 | F_ID_1 | Zhang San | VP_1 | Dir_1 | 1 | 3 | 3 | ROOM 1 |
| | End 00:333 | | | | | | | | |
| S4 | Start 00:333 | Null | Null | VP_4 | Dir_4 | 0 | 1 | 1 | ROOM 1 |
| | End 00:350 | | | | | | | | |
| S5 | Start 00:350 | F_ID_6 | Null | VP_3 | Dir_5 | 0 | 1 | 1 | ROOM 1 |
| | End 01:200 | | | | | | | | |
| S6 | Start 01:200 | F_ID_5 | Wang Wu | VP_4 | Dir_4 | 0 | 1 | 1 | ROOM 1 |
| | End 01:420 | | | | | | | | |
| ... | ... | ... | ... | ... | ... | ... | ... | ... | ... |
| Sn | Start 02:001 | F_ID_2 | Li Si | VP_2 | Dir_2 | 0 | 1 | 1 | ROOM 1 |
| | End 02:200 | | | | | | | | |

It should be noted that, some information in the foregoing information may alternatively not be included in the first additional information, for example, a sound source direction of each audio segment, a reference identifier of each audio segment, a quantity of speakers in each audio segment, and a quantity of mono audios included in each audio segment. The information may be subsequently obtained by the conference information processing device.

Optionally, information that needs to be sent to the conference information processing device may include a first voiceprint feature library that has been established locally on the conference terminal in real time, to improve accuracy of voiceprint recognition performed by the conference information processing device. For example, if the conference audio received by the conference information processing device does not completely record complete audio data in each conference site, when performing voiceprint recognition, the conference information processing device cannot determine that all speakers have sufficient audio segments for creating a local voiceprint feature library of the conference information processing device, and therefore cannot perform accurate voiceprint recognition. When the conference information processing device receives the first voiceprint feature library, more voiceprint feature libraries are available. Subsequently, the conference information processing device may directly use the first voiceprint feature library, or may perform update based on the first voiceprint feature library, to obtain a voiceprint feature library with richer voiceprint features, for example, a second voiceprint feature library. The conference information processing device may perform voiceprint recognition more accurately based on the first voiceprint feature library or the second voiceprint feature library.

Step S303: The conference terminal sends the conference audio recorded in the conference process and first additional information corresponding to the plurality of audio segments to the conference information processing device.

Specifically, the conference audio is a long audio segment, for example, may be a complete audio that is in the first conference site and that is recorded by the conference terminal in the conference process, that is, a long audio obtained by splicing the plurality of audio segments, or an audio longer than a long audio obtained by splicing the plurality of audio segments.

Optionally, the conference terminal may first send the conference audio and the first additional information corresponding to each audio segment to the MCU, for example, by using the Transmission Control Protocol (TCP), and then the MCU forwards the information to the conference information processing device. Optionally, a conference site from which the conference audio comes and a corresponding timestamp may also be marked by the MCU and sent to the conference information processing device.

Step S304: The conference information processing device receives the conference audio and the first additional information corresponding to the plurality of audio segments that are sent by the conference terminal in the first conference site.

Specifically, the conference information processing device may distinguish between the plurality of pieces of received first additional information based on identification information in the first additional information corresponding to the plurality of audio segments, that is, know which first additional information corresponds to which audio segment.

In addition, when there are a plurality of conference sites, the conference information processing device may classify and store data from all the conference sites based on the conference sites, and then independently perform processing in each conference site. Subsequent processing is described by using the first conference site as an example.

Step S305: The conference information processing device performs speech segmentation on the conference audio to obtain the plurality of audio segments.

Specifically, the conference information processing device may perform speech segmentation on the conference audio based on the sound source direction of the audio segment. A principle thereof is similar to a principle of collecting the audio segment by the conference terminal based on the sound source direction or segmenting the conference audio by the conference terminal based on the sound source direction. Both principles are based on the sound source direction, so that sound source directions of two audio segments that are adjacent in a time sequence and that are finally obtained through segmentation are different. Because both the conference information processing device and the conference terminal obtain the audio segment based on the sound source direction, the conference information processing device may also obtain, through segmentation, the plurality of audio segments that can be obtained on the conference terminal side. In addition, the conference information processing device may further obtain another audio segment through segmentation. To be specific, in addition to the plurality of audio segments, the conference information processing device may further obtain the another audio segment through segmentation. Because differences in a processing capability and precision may exist when different devices process a same conference audio, the audio segments finally obtained through segmentation are different. The following mainly describes the plurality of audio segments.

Optionally, when the first additional information sent by the conference terminal includes a timestamp of each audio segment obtained by the conference terminal through segmentation, the conference terminal may also obtain the plurality of audio segments through segmentation based on the timestamp. For example, if timestamp information is "start 00:000 to end 00:200", the conference terminal may use an audio from a moment 00:000 to a moment 00:200 in the conference audio as an audio segment through segmentation.

Step S306: The conference information processing device performs voiceprint recognition on the plurality of audio segments obtained through speech segmentation to obtain second additional information corresponding to each of the plurality of audio segments.

Specifically, the second additional information corresponding to each audio segment includes information used to determine a speaker identity corresponding to the audio segment and identification information of the corresponding audio segment. For example, the conference system further includes a second voiceprint feature library, and the second voiceprint feature library includes voiceprint features; and that the conference information processing device performs voiceprint recognition on the plurality of audio segments obtained through speech segmentation to obtain second additional information corresponding to each of the plurality of audio segments includes: The conference information processing device determines a voiceprint feature of a first audio segment, and searches the second voiceprint feature library for the voiceprint feature of the first audio segment, where the second additional information includes a matching result of the voiceprint matching and identification information (for example, a timestamp) of the first audio segment, and the first audio segment is one of the plurality of audio segments. Optionally, the second voiceprint feature library may be a voiceprint feature library obtained by improving the first voiceprint feature library. Herein, the matching result of the voiceprint matching includes a voiceprint identifier (ID). Certainly, the voiceprint identifier (ID) may not be found for the first audio segment. In this case, the recognition result may be null, or may be filled with other information. The voiceprint ID is used to identify a voiceprint feature. It may be understood that usually, if voiceprint features are different, human identities corresponding to the voiceprint features are also different. Correspondingly, if voiceprint IDs are different, human identities corresponding to the voiceprint IDs are also different. It may be understood that, herein, for ease of description, the first audio segment is specially used as an example for description. A manner of generating second additional information corresponding to another audio segment may be the same as a manner of generating the second additional information corresponding to the first audio segment. The following describes a representation form of the second additional information by using Table 4 as an example.

**Table 4**

| Audio segment | Timestamp (second:millisecond) | Voiceprint ID |
|---|---|---|
| S1 | Start 00:001 | VP_1 |
| | End 00:200 | |
| S2 | Start 00:200 | Null |
| | End 00:221 | |
| S3 | Start 00:221 | VP_1 |
| | End 00:333 | |
| S4 | Start 00:333 | VP_4 |
| | End 00:350 | |
| S5 | Start 00:350 | VP_3 |
| | End 01:200 | |
| S6 | Start 01:200 | VP_4 |
| | End 01:420 | |
| ... | ... | ... |
| Sn | Start 02:001 | VP_2 |
| | End 02:200 | |

Optionally, the first audio segment is a multisource segment, and that the conference information processing device determines a voiceprint feature of a first audio segment, and searches the second voiceprint feature library for the voiceprint feature of the first audio segment may be specifically as follows: The conference information processing device performs sound source separation on the first audio segment to obtain a plurality of mono audios. The conference information processing device determines a voiceprint feature of each mono audio, and searches the second voiceprint feature library for voiceprint features of the plurality of mono audios, to determine a speaker identity corresponding to each mono audio, that is, obtain a plurality of speaker identities in the first audio segment. To be specific, when a plurality of persons speak in an audio segment, the conference information processing device respectively searches for voiceprint features for the plurality of persons in the audio segment, rather than searches for only one voiceprint feature.

Optionally, the conference terminal may send information (shown in Table 4) such as whether a plurality of persons speak, a quantity of speakers, and a quantity of audio channels to the conference information processing device, and the conference information processing device determines, based on the information, a quantity of mono audios included in the first audio segment. Certainly, the conference information processing device may alternatively obtain information such as whether a plurality of persons speak, a quantity of speakers, and a quantity of audio channels, and then determine, based on the information, a quantity of mono audios included in the first audio segment.

Step S307: The conference information processing device generates a correspondence between a participant and a statement in the first conference site based on the first additional information and the second additional information.

First, the conference information processing device determines, based on information that is used to determine a speaker identity and that is in first additional information corresponding to a first audio segment and information that is used to determine a speaker identity and that is in second additional information corresponding to the first audio segment, a speaker identity corresponding to the first audio segment. Specifically, the conference information processing device may identify the speaker identity based on a face identity and a voiceprint identity that are included in a set of the first additional information and the second additional information. Alternatively, the conference information processing device may identify the speaker identity based on a voiceprint ID and a voiceprint identity that are included in a set of the first additional information and the second additional information. Because costs required for determining an identity corresponding to a voiceprint are high, in a specific implementation, a voiceprint identity corresponding to the voiceprint may not be registered in advance. In this case, the conference information processing device may identify the speaker identity based on a face ID, a face identity, and a voiceprint ID that are included in a set of the first additional information and the second additional information.

To improve recognition accuracy or a possibility of successful recognition, based on the face identity and the voiceprint identity, the face ID or the voiceprint ID may also be introduced to recognize the speaker identity. For example, when voiceprint features of two voiceprints are similar, a voice of one person may match the two voiceprint features. In this case, the face ID may be used to further recognize an accurate identity of the person. Similarly, facial features of two persons are obtained through facial recognition, but only one person speaks actually. In this case, the voiceprint ID needs to be used to further identify an accurate identity of the speaker. It may be understood that, in this case, the set of the first additional information and the second additional information needs to include the face ID or the voiceprint ID.

The following enumerates implementation cases.

Case 1: When the first additional information and the second additional information are combined as shown in Table 3 (it may be understood that the second additional information may be obtained by enhancing and completing the first additional information, so that content in Table 3 is complete), if the first audio segment is the audio segment S1, for the audio segment S1, two faces are recognized, corresponding face identities include Zhang San and Liu Liu, and a sound source direction is Dir_1, but for the audio segment S3, a recognized face identity is Zhang San and a sound source direction is also Dir_1, it may be learned that a speaker identity corresponding to the audio segment S1 is Zhang San. Similarly, if the first audio segment is the audio segment S4, for the audio segment S4, a sound source direction is Dir_4, a voiceprint ID corresponds to VP_4, and there is no face information, but for the audio segment S6, a recognized voiceprint ID is VP_4 and a corresponding face identity is Wang Wu, it may be determined that a speaker identity corresponding to S4 is Wang Wu.

Case 2: After the first additional information and the second additional information are combined, a voiceprint recognition result and a facial recognition result of each of the plurality of audio segments may be obtained. Further, when a speaker identity is determined based on the voiceprint recognition result and the facial recognition result, there are several different cases:

Case a: When the voiceprint recognition result includes a voiceprint ID (that is, the recognition result is not null), the voiceprint ID corresponds to the speaker identity. When the facial recognition result includes a face ID (that is, the facial recognition result is not null), the face ID also corresponds to a face identity. If the first additional information is shown in Table 1, and the first audio segment is the audio segment S1, it can be learned that in Table 1, first additional information corresponding to the first audio segment (that is, S1) includes face IDs, including F_ID_1 and F_ID_3, where a face identity corresponding to F_ID_1 is Zhang San, and a face identity corresponding to F_ID_3 is Liu Liu. Therefore, a speaker identity corresponding to the first audio segment cannot be uniquely determined. In this case, further determining may be performed based on second additional information. If the second additional information is shown in Table 5, it can be learned that second additional information corresponding to the first audio segment (S1) in Table 5 includes a voiceprint ID, including VP_1, where a voiceprint identity corresponding to VP_1 is Zhang San. Therefore, it may be finally determined that the speaker identity corresponding to the first audio segment (that is, the audio segment S1) is Zhang San.

**Table 5**

| Audio segment | Timestamp (second:millisecond) | Voiceprint ID | Voiceprint identity |
|---|---|---|---|
| S1 | Start 00:001 | VP_1 | Zhang San |
| | End 00:200 | | |
| S2 | Start 00:200 | Null | Li Si |
| | End 00:221 | | |
| S3 | Start 00:221 | VP_1 | Zhang San |
| | End 00:333 | | |
| S4 | Start 00:333 | VP_4 | Null |
| | End 00:350 | | |
| S5 | Start 00:350 | VP_3 | Null |
| | End 01:200 | | |
| S6 | Start 01:200 | VP_4 | Wang Wu |
| | End 01:420 | | |
| ... | ... | ... | ... |
| Sn | Start 02:001 | VP_2 | Li Si |
| | End 02:200 | | |

Case b: When the voiceprint recognition result includes a voiceprint ID (that is, the recognition result is not null), the voiceprint ID does not specifically correspond to a speaker identity, but a voiceprint represented by the voiceprint ID can be definitely distinguished from a voiceprint represented by another voiceprint ID. When the facial recognition result includes a face ID (that is, the facial recognition result is not null), the face ID also corresponds to the speaker identity. In this case, if the first additional information is shown in Table 1, the second additional information is shown in Table 4, a second audio segment is the audio segment S6, and the first audio segment is the audio segment S4, it can be learned that in Table 1, first additional information corresponding to the second audio segment (that is, S6) includes a face ID, including F_ID_5, where a face identity corresponding to F_ID_5 is Wang Wu, and in Table 1, first additional information corresponding to the first audio segment (that is, S4) does not include a face ID (that is, the facial recognition result is null). In this case, a speaker identity corresponding to the first audio segment needs to be further determined based on the information in Table 4. In Table 4, second additional information corresponding to the first audio segment includes a voiceprint ID, including VP_4; and second additional information corresponding to the second audio segment also includes a voiceprint ID, including VP_4. Therefore, it can be determined, based on the information in Table 4, that the speaker identity corresponding to the first audio segment is the same as a speaker identity corresponding to the second audio segment, and it can be further determined, based on the information in Table 1, that a face identity corresponding to the second audio segment is Wang Wu. Therefore, it can be determined that the speaker identity corresponding to the first audio segment is Wang Wu.

Case 3: The first additional information is shown in Table 2, and the second additional information is shown in Table 4. To be specific, the first additional information includes a voiceprint recognition result, the second additional information also includes a voiceprint recognition result, and each voiceprint ID corresponds to a speaker identity. In this way, when the voiceprint recognition result in one of the first additional information and the second additional information is null, the speaker identity may be determined based on a voiceprint ID in the other additional information. When the two voiceprint recognition results in the first additional information and the second additional information include voiceprint IDs, the speaker identity may be determined comprehensively based on the voiceprint IDs in the two voiceprint recognition results, and the determined result is also more accurate.

Case 4: The first additional information is shown in Table 3, and the second additional information is shown in Table 4. The voiceprint recognition result in Table 3 and the voiceprint recognition result in Table 4 may be considered to complete each other to obtain a more accurate voiceprint recognition result. Subsequently, for a principle of determining the speaker identity based on the more accurate voiceprint recognition result and the facial recognition result in Table 3, refer to a manner of determining the speaker identity based on the voiceprint recognition result and the facial recognition result in Case 1. Details are not described herein again.

Further, the sound source directions may be determined by the conference terminal and then sent to the conference information processing device. Certainly, both the conference terminal and the conference information processing device may obtain the sound source directions, and then the conference information processing device synthesizes the sound source directions obtained by both the conference terminal and the conference information processing device for use of determining the speaker identity.

After generating a speaker identity corresponding to each of the plurality of audio segments, the conference information processing device generates a conference record, where the conference record includes a statement of the first audio segment and the speaker identity corresponding to the first audio segment, and the first audio segment is one of the plurality of audio segments. For a processing manner of another audio segment in the plurality of audio segments, refer to the descriptions of the first audio segment herein. Therefore, the finally generated conference record includes the statement of each of the plurality of audio segments and the corresponding speaker identity. Optionally, the statement herein includes one or more of a statement text, a statement time period and a statement speech. Descriptions are provided below by using examples.

For example, if the statement is a statement text, specific text content of a statement made by each person during a conference may be obtained in the foregoing manner. Descriptions are provided below by using an example.

Zhang San: Sales of this month are not good. Let's analyze the cause of the problem.

Li Si: Now, it is the conventional off-season. In addition, the promotion of competitors is stronger. As a result, the market share is preempted by the competitors.

Wang Wu: In my opinion, the competitiveness of our products has declined, and several market problems have arisen. As a result, customers refuse to buy our products.

Zhang San: I also interviewed several customers and several sales people.

In this manner, a statement text of each audio segment is marked with a speaker identifier. In this manner, there is a step of speech recognition, that is, an audio is transcribed into a text.

For another example, if the statement is a statement time period, an occasion on which each person makes a statement during a conference may be obtained in the foregoing manner. Descriptions are provided below by using an example (where a time format is second:millisecond).

Zhang San: Making a statement from 00:000 to 10:000

Li Si: Making a statement from 10:000 to 10:220

Wang Wu: Making a statement from 10:220 to 13:110

Zhang San: Making a statement from 13:110 to 16:010

In this manner, a statement time period of each audio segment is marked with a speaker identifier.

Optionally, a statement occasion or statement duration may be further used to determine importance of a speaker (for example, whether the speaker is a leader).

For another example, if the statement is a statement speech, an audio segment of a statement made by each person during a conference may be obtained in the foregoing manner. Descriptions are provided below by using an example (where a time format is second: millisecond).

Zhang San: Audio segment 00:000 to 10:000

Li Si: Audio segment 10:000 to 10:220

Wang Wu: Audio segment 10:220 to 13:110

Zhang San: Audio segment 13:110 to 16:010

It may be understood that, if sound source separation is first performed on the first audio segment and then a voiceprint feature of each mono audio is identified, in the step of generating the conference record, a statement of each mono audio in the first audio segment and a speaker identity corresponding to each mono audio are specifically generated.

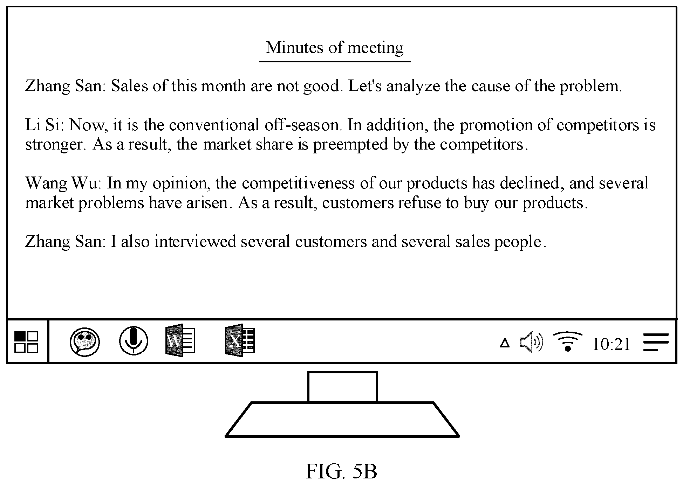

It should be noted that the conference in the embodiments of this application may be jointly held in a plurality of conference sites. In this case, the first conference site is one of the plurality of conference sites. A manner in which the conference information processing device processes a conference audio in each conference site is the same as a manner in which the conference information processing device processes the conference audio in the first conference site. Processing may be performed in the conference sites one by one in a polling manner. After processing is completed in all the conference sites, a correspondence between a participant and a statement in each conference site may be obtained, and a statement sequence may be further reflected. Optionally, a complete conference record may be generated for each conference site to reflect a correspondence between a statement and a corresponding role (for example, a speaker). Optionally, the conference information processing device may further display the obtained correspondence between the participant and the statement (for example, through a display), or send the obtained correspondence to another device for display. A display interface may be shown in FIG. 5B.

In the method described in FIG. 3, the conference terminal obtains the conference audio and the audio segment in the conference process, identifies, based on each audio segment, information used to determine a speaker identity corresponding to the audio segment, and then sends, to the conference information processing device, the conference audio and the identified information used to determine the speaker identity corresponding to the audio segment. The conference information processing device may also segment the conference audio to obtain the plurality of audio segments, identify information used to determine a speaker identity corresponding to each audio segment, and then determine, based on the information that is identified by the conference information processing device and that is used to determine the speaker identity corresponding to each audio segment and the received information used to determine the speaker identity corresponding to each audio segment, a speaker corresponding to each segment. In a manner of jointly determining the speaker identity by the conference terminal and the conference information processing device, the determined speaker identity can be more accurate. In addition, because both the conference terminal and the conference information processing device perform identification, the conference terminal and the conference information processing device may perform identification based on respective information bases, and do not need to merge the information bases of the conference terminal and the conference information processing device together, to prevent information leakage of each other and effectively protect privacy security of a participant.

It can be learned from the foregoing descriptions that, after receiving the conference audio and the first additional information from the conference terminal, the conference information processing device performs a series of processing operations, such as speech segmentation, voiceprint recognition, speech recognition, and sound source separation. The following describes operations of all steps by using examples with reference to the accompanying drawings, to better understand the solutions of the embodiments of this application.

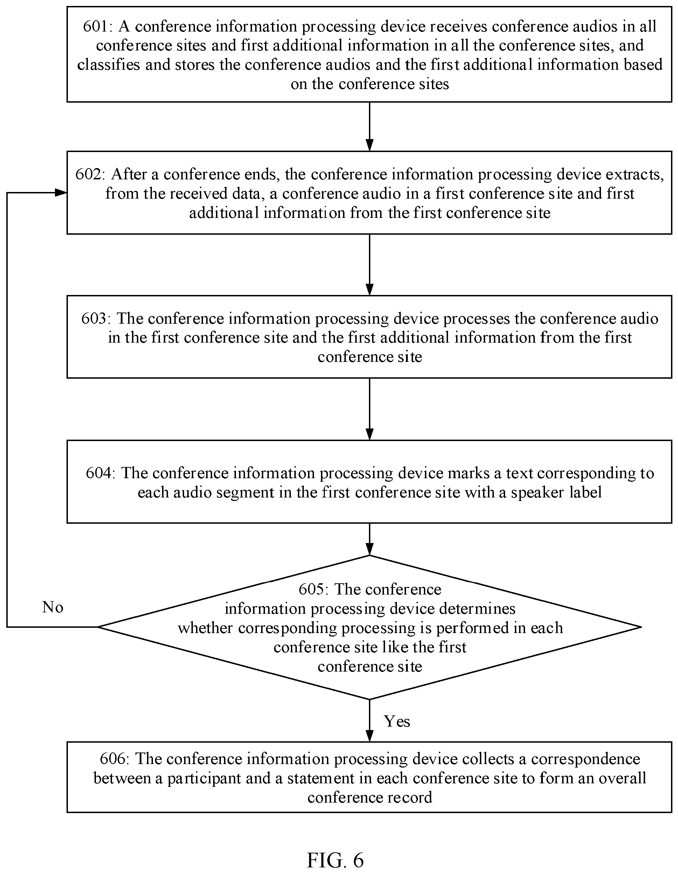

FIG. 6 is a schematic flowchart of performing processing by a conference information processing device according to an embodiment of this application. The following steps are included.

601: The conference information processing device receives conference audios in all conference sites and first additional information in all the conference sites, and classifies and stores the conference audios and the first additional information based on the conference sites, for example, stores, in a file, a conference audio and first additional information in a first conference site, stores, in another file, a conference audio and first additional information in a second conference site, and so on. Certainly, the conference information processing device may also perform classification in another manner.

Optionally, the conference information processing device may also record speech data in all conference sites into a same file in a time sequence. During segmentation, the conference information processing device first separates an audio in each conference site independently, then performs segmentation and identity recognition on a speech in the conference site based on first additional information in the corresponding conference site, and maps a result to a corresponding speech segment in the recorded speech file.

602: After a conference ends, the conference information processing device extracts, from the received data, the conference audio in the first conference site and the first additional information from the first conference site.

603: The conference information processing device processes the conference audio in the first conference site and the first additional information from the first conference site, where the processing includes: performing speech segmentation, performing voiceprint recognition, converting each audio segment into a corresponding text, and the like. This process includes a process of generating the foregoing second additional information, and subsequent processing includes a process of identifying, based on the first additional information and the second additional information, a speaker identity corresponding to each audio segment in the first conference site, and a process of identifying text content of each audio segment.

604: The conference information processing device marks a text corresponding to each audio segment in the first conference site with a speaker identity, that is, marks which text is spoken by which person, that is, generates the foregoing correspondence between the participant and the statement in the first conference site.

605: The conference information processing device determines whether corresponding processing is performed in each conference site like the first conference site, and if corresponding processing is not performed in each conference site like the first conference site, performs step 602 to step 604 to perform corresponding processing on remaining sites; or if corresponding processing is performed in each conference site like the first conference site, performs step S606.

606: The conference information processing device collects a correspondence between a participant and a statement in each conference site to form an overall conference record.

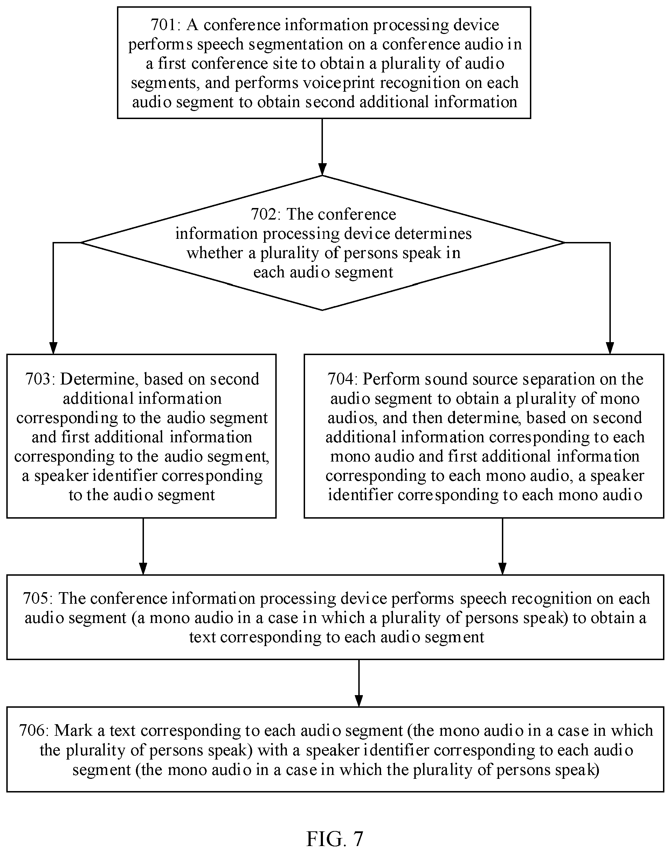

FIG. 7 is a schematic flowchart of processing a conference audio and first additional information according to an embodiment of this application. Specifically, FIG. 7 is a further extension of step 603, and includes the following steps:

701: A conference information processing device performs speech segmentation on a conference audio in a first conference site to obtain a plurality of audio segments, and performs voiceprint recognition on each audio segment to obtain second additional information.

702: The conference information processing device determines whether a plurality of persons speak in each audio segment. Whether the plurality of persons speak may be notified by a conference terminal to the conference information processing device after identification.

703: If a single person speaks in an audio segment, determine, based on second additional information corresponding to the audio segment and first additional information corresponding to the audio segment, a speaker identifier corresponding to the audio segment.

704: If a plurality of persons speak in an audio segment, perform sound source separation on the audio segment to obtain a plurality of mono audios, and then determine, based on second additional information corresponding to each mono audio and first additional information corresponding to each mono audio, a speaker identifier corresponding to each mono audio.

705: The conference information processing device performs speech recognition on each audio segment to obtain a text corresponding to each audio segment.

706: The conference information processing device marks a text corresponding to each audio segment (a mono audio in a case in which a plurality of persons speak) with a speaker identifier corresponding to each audio segment (the mono audio in a case in which the plurality of persons speak).

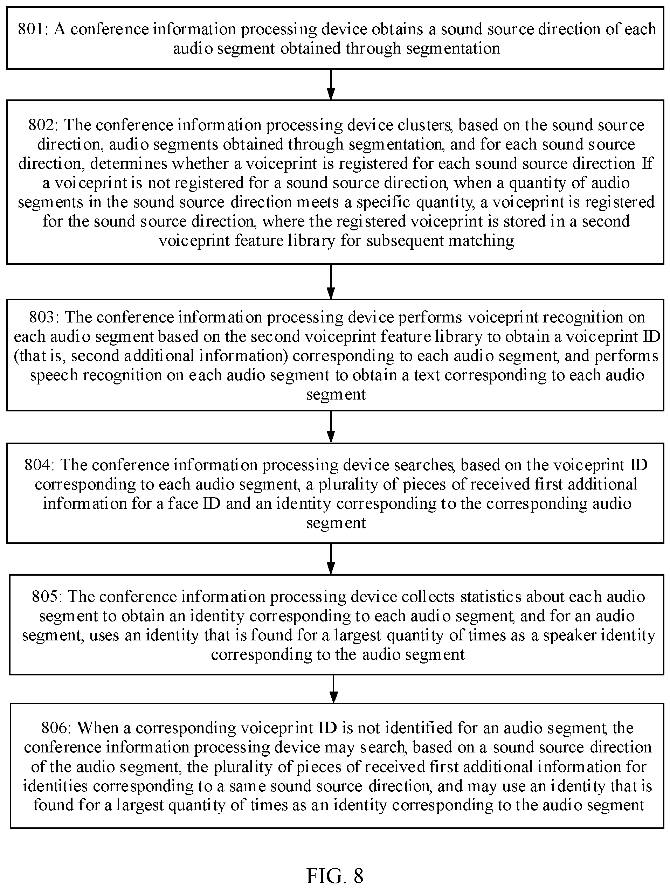

FIG. 8 is a schematic flowchart of performing voiceprint recognition and determining a speaker according to an embodiment of this application. The following steps are included.

801: A conference information processing device obtains a sound source direction of each audio segment obtained through segmentation.

802: The conference information processing device clusters, based on the sound source direction, audio segments obtained through segmentation, and for each sound source direction, determines whether a voiceprint is registered for each sound source direction. If a voiceprint is not registered for a sound source direction, when a quantity of audio segments in the sound source direction meets a specific quantity, a voiceprint is registered for the sound source direction, where the registered voiceprint is stored in the foregoing second voiceprint feature library for subsequent matching.

803: The conference information processing device performs voiceprint recognition on each audio segment based on the second voiceprint feature library to obtain a voiceprint ID (that is, obtain second additional information) corresponding to each audio segment, and performs speech recognition on each audio segment to obtain a text corresponding to each audio segment.

804: The conference information processing device searches, based on the voiceprint ID corresponding to each audio segment, a plurality of pieces of received first additional information (for example, Table 1, Table 2, or Table 3) for a face ID and a face identity corresponding to the corresponding audio segment.

805: The conference information processing device collects statistics about each audio segment to obtain a face identity corresponding to each audio segment, and for an audio segment, uses a face identity that is found for a largest quantity of times as a speaker identity corresponding to the audio segment.

806: When a corresponding voiceprint ID is not identified for an audio segment, the conference information processing device may search, based on a sound source direction of the audio segment, the plurality of pieces of received first additional information for face identities corresponding to a same sound source direction, and may use a face identity that is found for a largest quantity of times as a face identity corresponding to the audio segment.

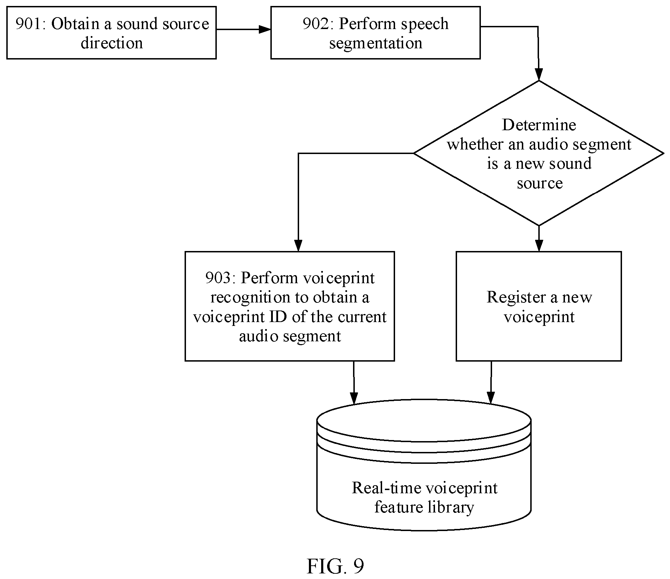

FIG. 9 is a schematic flowchart of voiceprint recognition according to an embodiment of this application. The following steps are included.

901: A conference information processing device obtains a sound source direction in a conference audio.

902: The conference information processing device performs speech segmentation on the conference audio based on the sound source direction in the conference audio to obtain a plurality of audio segments.

903: The conference information processing device performs, based on a second voiceprint feature library (where the second voiceprint feature library is obtained based on a first voiceprint feature library), voiceprint recognition on each audio segment obtained through segmentation to obtain a voiceprint ID corresponding to the corresponding audio segment, and refreshes the voiceprint ID corresponding to the audio segment. Certainly, if an audio segment is a new sound source, a voiceprint is extracted and a voiceprint ID is registered based on some audio segments in a same direction. The registered voiceprint ID may be used to identify whether an audio segment and another audio segment are from a same person.

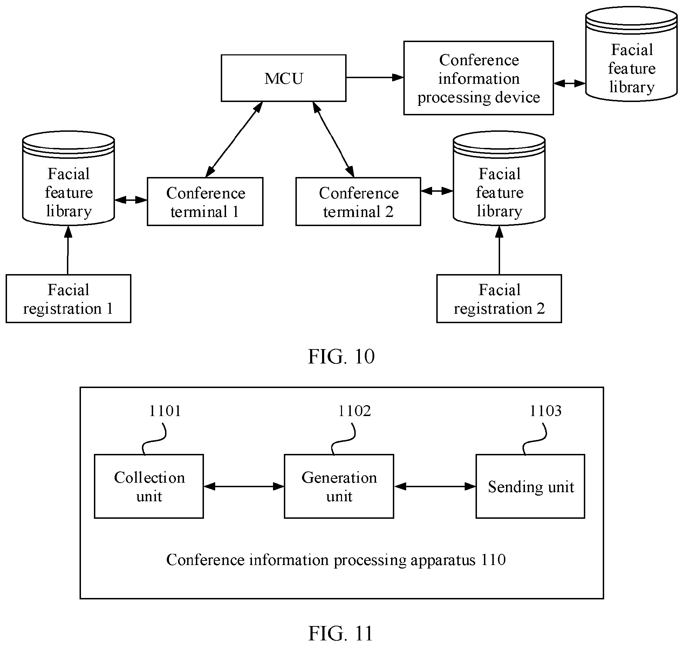

In an optional solution of this application, each conference terminal (for example, a conference terminal 1 or a conference terminal 2) sends a facial recognition result to an MCU, and correspondingly, the MCU forwards the information to the conference information processing device. In this way, when determining a speaker identity corresponding to an audio segment, the conference information processing device does not need to perform facial recognition, to improve privacy security. FIG. 10 is a schematic diagram of an ideal conference architecture. In some cases, content in a facial feature library 1, a facial feature library 2, and a facial feature library 3 is the same, and a conference terminal 1, a conference terminal 2, and a conference information processing device may perform facial recognition based on corresponding facial feature libraries respectively. However, in some cases, the conference terminal 1 is in a company A, the conference terminal is in a company B, and the conference information processing device is in a service provider C. In this case, persons in the company A and the company B register faces in the facial feature library 1 and the facial feature library 2 respectively, and these faces are not registered with the facial feature library 3. Therefore, a speaker identity can be identified only inside the company A and the company B, and the speaker identity cannot be identified by the conference information processing device. In an optional solution of this application, it is proposed that the conference terminal performs facial recognition, and the conference information processing device does not need to perform facial recognition, to avoid a problem that the conference information processing device cannot accurately obtain the speaker identity in the foregoing special scenario.

The methods in the embodiments of the present invention are described in detail above, and apparatuses in embodiments of the present invention are provided below.

FIG. 11 is a schematic diagram of a structure of a conference information processing apparatus 110 according to an embodiment of the present invention. The conference information processing apparatus 110 may be the conference terminal described above or a component in the conference terminal. The conference information processing apparatus 110 is applied to a conference system, and may include a collection unit 1101, a generation unit 1102, and a sending unit 1103. Detailed descriptions of the units are as follows:

The collection unit 1101 is configured to collect an audio segment in a first conference site based on a sound source direction in a conference process, where sound source directions of two audio segments that are adjacent in a time sequence are different. In a specific implementation, the conference terminal may continuously detect the sound source direction in the conference process (for example, may detect the sound source direction based on a preset frequency). When the sound source direction changes, the conference terminal starts to collect a next audio segment. For example, an audio direction in a conference period from the 0^{th} minute to the 6^{th} minute is a direction 1, an audio direction in a conference period from the 6^{th} minute to the 10^{th} minute is a direction 2, and an audio direction in a conference period from the 10^{th} minute to the 15^{th} minute is a direction 3. Therefore, the conference terminal collects an audio from the 0^{th} minute to the 6^{th} minute and uses the audio as an audio segment, collects an audio from the 6^{th} minute to the 10^{th} minute and uses the audio as an audio segment, and collects an audio from the 10^{th} minute to the 15^{th} minute and uses the audio as an audio segment. It may be understood that a plurality of audio segments may be collected in this manner.

The generation unit 1102 is configured to generate first additional information corresponding to each of a plurality of collected audio segments, where the first additional information corresponding to each audio segment includes information used to determine a speaker identity corresponding to the audio segment and identification information of the corresponding audio segment. Optionally, the identification information may be a timestamp, and a timestamp corresponding to each audio segment includes a start time point and an end time point of the audio segment. Optionally, the identification information may also be generated according to a preset rule. Therefore, a conference information processing device may also process a corresponding identifier according to the preset rule, to determine which segment in a conference is an audio segment identified by the identification information.

The sending unit 1103 is configured to send, to the conference information processing device, a conference audio recorded in the conference process and first additional information corresponding to the plurality of audio segments, where the conference audio is segmented (for example, is segmented based on the sound source direction, so that sound source directions of two audio segments that are adjacent in a time sequence and that are obtained through segmentation are different) by the conference information processing device into a plurality of audio segments and corresponding second additional information is attached to the plurality of audio segments, second additional information corresponding to each audio segment includes information used to determine a speaker identity corresponding to the audio segment and identification information of the corresponding audio segment, and the first additional information and the second additional information are used by the conference information processing device to generate a correspondence between a participant and a statement in the first conference site. The correspondence may be a correspondence between all participants who have spoken and statements, or may be a correspondence between a participant who has spoken more and a statement, or certainly may be another case.

According to the foregoing method, the conference terminal obtains the conference audio and the audio segment in the conference process, identifies, based on each audio segment, information used to determine a speaker identity corresponding to the audio segment, and then sends, to the conference information processing device, the conference audio and the identified information used to determine the speaker identity corresponding to the audio segment. The conference information processing device may also segment the conference audio to obtain the plurality of audio segments, identify information used to determine a speaker identity corresponding to each audio segment, and then determine, based on the information that is identified by the conference information processing device and that is used to determine the speaker identity corresponding to each audio segment and the received information used to determine the speaker identity corresponding to each audio segment, a speaker corresponding to each segment. In a manner of jointly determining the speaker identity by the conference terminal and the conference information processing device, the determined speaker identity can be more accurate. In addition, because both the conference terminal and the conference information processing device perform identification, the conference terminal and the conference information processing device may perform identification based on respective information bases, and do not need to merge the information bases of the conference terminal and the conference information processing device together, to prevent information leakage of each other and effectively protect privacy security of a participant.

In a possible implementation, the conference system further includes a facial feature library, and the facial feature library includes facial features; and in the aspect of generating first additional information corresponding to each of a plurality of collected audio segments, the generation unit 1102 is specifically configured to:
perform facial recognition on a target image based on the facial feature library, where the target image is a facial image that is in a sound source direction of a first audio segment and that is captured (for example, captured by using a director camera, a camera, or a camera module) in a process of recording the first audio segment, and the first audio segment is one of the plurality of audio segments; and for a processing manner of another audio segment in the plurality of audio segments, refer to a processing manner of the first audio segment; and
generate first additional information corresponding to the first audio segment, where the first additional information corresponding to the first audio segment includes a recognition result of the facial recognition and identification information of the first audio segment. The recognition result herein may include a face ID used to identify a facial feature, and facial features identified by different face IDs are different. Optionally, the recognition result may further include a face identity used to identify a specific person. It should be noted that there may be a case in which facial recognition is performed but a facial feature is not recognized. In this case, the recognition result may be null, or may be content filled according to a preset rule.

In this implementation, the facial image in the sound source direction of the audio segment is recognized based on the facial feature library, to preliminarily obtain the information used to determine the speaker identity, which can improve accuracy of subsequently determining the speaker identity.

In a possible implementation, the conference system further includes a first voiceprint feature library, and the first voiceprint feature library includes voiceprint features; and in the aspect of generating first additional information corresponding to each of a plurality of collected audio segments, the generation unit 1102 is specifically configured to:
determine a voiceprint feature of a first audio segment, and search the first voiceprint feature library for the voiceprint feature of the first audio segment, where the first audio segment is one of the plurality of audio segments; and for a processing manner of another audio segment in the plurality of audio segments, refer to a processing manner of the first audio segment; and
generate first additional information corresponding to the first audio segment, where the first additional information corresponding to the first audio segment includes a matching result of the voiceprint matching and identification information of the first audio segment. The matching result herein may be a voiceprint ID used to identify a voiceprint feature, and voiceprint features identified by different voiceprint IDs are different. It should be noted that there may be a case in which voiceprint recognition (or matching) is performed but a voiceprint feature is not recognized. In this case, the matching result may be null, or may be content filled according to a preset rule.

In this implementation, a voiceprint of the audio segment is recognized based on the voiceprint feature library, to preliminarily obtain the information used to determine the speaker identity, which can improve accuracy of subsequently determining the speaker identity.

In a possible implementation, the conference system further includes a facial feature library and a first voiceprint feature library, the facial feature library includes facial features, and the first voiceprint feature library includes voiceprint features; and in the aspect of generating first additional information corresponding to each of a plurality of collected audio segments, the generation unit 1102 is specifically configured to:
perform facial recognition on a target image based on the facial feature library, where the target image is an image that is in a sound source direction of a first audio segment and that is captured (for example, captured by using a director camera, a camera, or a camera module) in a process of recording the first audio segment, and the first audio segment is one of the plurality of audio segments; and for a processing manner of another audio segment in the plurality of audio segments, refer to a processing manner of the first audio segment;
determine a voiceprint feature of the first audio segment, and search the first voiceprint feature library for the voiceprint feature of the first audio segment; and
generate first additional information corresponding to the first audio segment, where the first additional information corresponding to the first audio segment includes a recognition result of the facial recognition, a matching result of the voiceprint matching, and identification information of the first audio segment. The recognition result herein may include a face ID used to identify a facial feature, and facial features identified by different face IDs are different. Optionally, the recognition result may further include a face identity used to identify a specific person. It should be noted that there may be a case in which facial recognition is performed but a facial feature is not recognized. In this case, the recognition result may be null, or may be content filled according to a preset rule. The matching result herein may be a voiceprint ID used to identify a voiceprint feature, and voiceprint features identified by different voiceprint IDs are different. It should be noted that there may be a case in which voiceprint recognition (or matching) is performed but a voiceprint feature is not recognized. In this case, the matching result may be null, or may be content filled according to a preset rule.

In this implementation, a voiceprint of the audio segment is recognized based on the voiceprint feature library, and the facial image in the sound source direction of the audio segment is recognized based on the facial feature library, to preliminarily obtain the information used to determine the speaker identity. A combination of the information in the two aspects can improve accuracy of subsequently determining the speaker identity.

In a possible implementation, the apparatus further includes:
a storage unit, configured to: if the voiceprint feature of the first audio segment is not found from the first voiceprint feature library, store the voiceprint feature of the first audio segment into the first voiceprint feature library, where optionally, after a quantity of audio segments in a sound source direction is accumulated to some extent, a voiceprint feature (that is, a voiceprint feature corresponding to the sound source direction) that can be distinguished from a voiceprint feature of another user may be determined based on the accumulated audio segments. In this manner, the first voiceprint feature library can be continuously enriched and improved, so that accuracy of subsequent voiceprint recognition performed based on the first voiceprint feature library is higher.

In a possible implementation, the first audio segment is a multichannel audio, and in the aspect of determining a voiceprint feature of the first audio segment, and searching the first voiceprint feature library for the voiceprint feature of the first audio segment, the generation unit is specifically configured to:
perform sound source separation on the first audio segment to obtain a plurality of mono audios, where each mono audio is an audio of a speaker, and then determine a voiceprint feature of each mono audio; and
search the first voiceprint feature library for voiceprint features of the plurality of mono audios.

It may be understood that, when the first audio segment is a multichannel audio, sound source separation is performed on the first audio segment, and voiceprint recognition is performed on each mono audio obtained through separation, so that a correspondence between a statement and a speaker in a conference can be determined more accurately.

It should be noted that, for implementations and beneficial effects of the units, refer to corresponding descriptions in the method embodiments shown in FIG. 3 to FIG. 10.

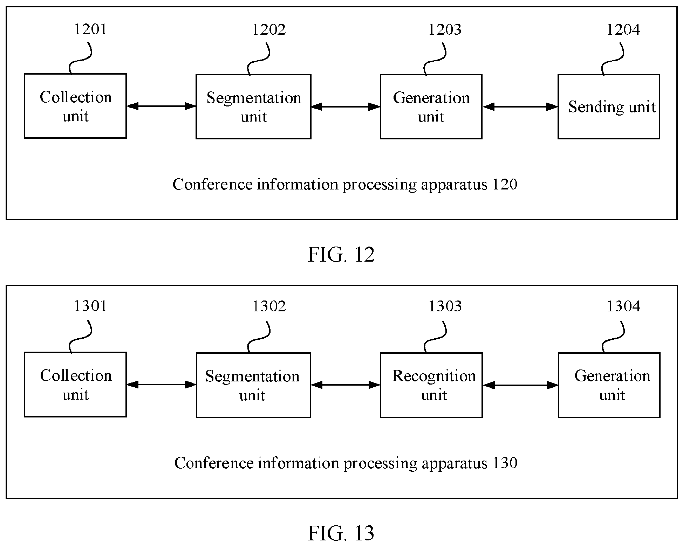

FIG. 12 is a schematic diagram of a structure of a conference information processing apparatus 120 according to an embodiment of the present invention. The conference information processing apparatus 120 may be the conference terminal described above or a component in the conference terminal. The conference information processing apparatus 120 is applied to a conference system, and may include a collection unit 1201, a segmentation unit 1202, a generation unit 1203, and a sending unit 1204. Detailed descriptions of the units are as follows:

The collection unit 1201 is configured to collect a conference audio in a first conference site in a conference process.

The segmentation unit 1202 is configured to perform speech segmentation on the conference audio based on a sound source direction in the conference audio to obtain a plurality of audio segments, where sound source directions of two audio segments that are adjacent in a time sequence are different. In a specific implementation, the conference terminal may continuously detect the sound source direction in the conference process (for example, may detect the sound source direction based on a preset frequency). When the sound source direction changes, the conference terminal starts to collect a next audio segment. For example, an audio direction in a conference period from the 0^{th} minute to the 6^{th} minute is a direction 1, an audio direction in a conference period from the 6^{th} minute to the 10^{th} minute is a direction 2, and an audio direction in a conference period from the 10^{th} minute to the 15^{th} minute is a direction 3. Therefore, the conference terminal collects an audio from the 0^{th} minute to the 6^{th} minute and uses the audio as an audio segment, collects an audio from the 6^{th} minute to the 10^{th} minute and uses the audio as an audio segment, and collects an audio from the 10^{th} minute to the 15^{th} minute and uses the audio as an audio segment. It may be understood that a plurality of audio segments may be collected in this manner.

The generation unit 1203 is configured to generate first additional information corresponding to each of the plurality of audio segments, where the first additional information corresponding to each audio segment includes information used to determine a speaker identity corresponding to the audio segment and identification information of the corresponding audio segment. Optionally, the identification information may be a timestamp, and a timestamp corresponding to each audio segment includes a start time point and an end time point of the audio segment. Optionally, the identification information may also be generated according to a preset rule. Therefore, a conference information processing device may also process a corresponding identifier according to the preset rule, to determine which segment in a conference is an audio segment identified by the identification information.

The sending unit 1204 is configured to send, to the conference information processing device, the conference audio and first additional information corresponding to the plurality of audio segments, where the conference audio is segmented by the conference information processing device into the plurality of audio segments and corresponding second additional information is attached to the plurality of audio segments, second additional information corresponding to each audio segment includes information used to determine a speaker identity corresponding to the audio segment and identification information of the corresponding audio segment, and the first additional information and the second additional information are used by the conference information processing device to generate a correspondence between a participant and a statement in the first conference site. The correspondence may be a correspondence between all participants who have spoken and statements, or may be a correspondence between a participant who has spoken more and a statement, or certainly may be another case.

According to the foregoing method, the conference terminal obtains the conference audio and the audio segment in the conference process, identifies, based on each audio segment, information used to determine a speaker identity corresponding to the audio segment, and then sends, to the conference information processing device, the conference audio and the identified information used to determine the speaker identity corresponding to the audio segment. The conference information processing device may also segment the conference audio to obtain the plurality of audio segments, identify information used to determine a speaker identity corresponding to each audio segment, and then determine, based on the information that is identified by the conference information processing device and that is used to determine the speaker identity corresponding to each audio segment and the received information used to determine the speaker identity corresponding to each audio segment, a speaker corresponding to each segment. In a manner of jointly determining the speaker identity by the conference terminal and the conference information processing device, the determined speaker identity can be more accurate. In addition, because both the conference terminal and the conference information processing device perform identification, the conference terminal and the conference information processing device may perform identification based on respective information bases, and do not need to merge the information bases of the conference terminal and the conference information processing device together, to prevent information leakage of each other and effectively protect privacy security of a participant.

In a possible implementation, the conference system further includes a facial feature library, and the facial feature library includes facial features; and in the aspect of generating first additional information corresponding to each of the plurality of audio segments, the generation unit 1203 is specifically configured to:
perform facial recognition on a target image based on the facial feature library, where the target image is a facial image that is in a sound source direction of a first audio segment and that is captured (for example, captured by using a director camera, a camera, or a camera module) in a process of recording the first audio segment, and the first audio segment is one of the plurality of audio segments; and for a processing manner of another audio segment in the plurality of audio segments, refer to a processing manner of the first audio segment; and
generate first additional information corresponding to the first audio segment, where the first additional information corresponding to the first audio segment includes a recognition result of the facial recognition and identification information of the first audio segment. The recognition result herein may include a face ID used to identify a facial feature, and facial features identified by different face IDs are different. Optionally, the recognition result may further include a face identity used to identify a specific person. It should be noted that there may be a case in which facial recognition is performed but a facial feature is not recognized. In this case, the recognition result may be null, or may be content filled according to a preset rule.

In this implementation, the facial image in the sound source direction of the audio segment is recognized based on the facial feature library, to preliminarily obtain the information used to determine the speaker identity, which can improve accuracy of subsequently determining the speaker identity.

In a possible implementation, the conference system further includes a first voiceprint feature library, and the first voiceprint feature library includes voiceprint features; and in the aspect of generating first additional information corresponding to each of the plurality of audio segments, the generation unit 1203 is specifically configured to:
determine a voiceprint feature of a first audio segment, and search the first voiceprint feature library for the voiceprint feature of the first audio segment, where the first audio segment is one of the plurality of audio segments; and for a processing manner of another audio segment in the plurality of audio segments, refer to a processing manner of the first audio segment; and
generate first additional information corresponding to the first audio segment, where the first additional information corresponding to the first audio segment includes a matching result of the voiceprint matching and identification information of the first audio segment. The matching result herein may be a voiceprint ID used to identify a voiceprint feature, and voiceprint features identified by different voiceprint IDs are different. It should be noted that there may be a case in which voiceprint recognition (or matching) is performed but a voiceprint feature is not recognized. In this case, the matching result may be null, or may be content filled according to a preset rule.

In this implementation, a voiceprint of the audio segment is recognized based on the voiceprint feature library, to preliminarily obtain the information used to determine the speaker identity, which can improve accuracy of subsequently determining the speaker identity.

In a possible implementation, the conference system further includes a facial feature library and a first voiceprint feature library, the facial feature library includes facial features, and the first voiceprint feature library includes voiceprint features; and in the aspect of generating first additional information corresponding to each of the plurality of audio segments, the generation unit 1203 is specifically configured to:
perform facial recognition on a target image based on the facial feature library, where the target image is an image that is in a sound source direction of a first audio segment and that is captured (for example, captured by using a director camera, a camera, or a camera module) in a process of recording the first audio segment, and the first audio segment is one of the plurality of audio segments; and for a processing manner of another audio segment in the plurality of audio segments, refer to a processing manner of the first audio segment;
determine a voiceprint feature of the first audio segment, and search the first voiceprint feature library for the voiceprint feature of the first audio segment; and
generate first additional information corresponding to the first audio segment, where the first additional information corresponding to the first audio segment includes a recognition result of the facial recognition, a matching result of the voiceprint matching, and identification information of the first audio segment. The recognition result herein may include a face ID used to identify a facial feature, and facial features identified by different face IDs are different. Optionally, the recognition result may further include a face identity used to identify a specific person. It should be noted that there may be a case in which facial recognition is performed but a facial feature is not recognized. In this case, the recognition result may be null, or may be content filled according to a preset rule. The matching result herein may be a voiceprint ID used to identify a voiceprint feature, and voiceprint features identified by different voiceprint IDs are different. It should be noted that there may be a case in which voiceprint recognition (or matching) is performed but a voiceprint feature is not recognized. In this case, the matching result may be null, or may be content filled according to a preset rule.

In this implementation, a voiceprint of the audio segment is recognized based on the voiceprint feature library, and the facial image in the sound source direction of the audio segment is recognized based on the facial feature library, to preliminarily obtain the information used to determine the speaker identity. A combination of the information in the two aspects can improve accuracy of subsequently determining the speaker identity.

In a possible implementation, the apparatus further includes:
a storage unit, configured to: if the voiceprint feature of the first audio segment is not found from the first voiceprint feature library, store the voiceprint feature of the first audio segment into the first voiceprint feature library, where optionally, after a quantity of audio segments in a sound source direction is accumulated to some extent, a voiceprint feature (that is, a voiceprint feature corresponding to the sound source direction) that can be distinguished from a voiceprint feature of another user may be determined based on the accumulated audio segments. In this manner, the first voiceprint feature library can be continuously enriched and improved, so that accuracy of subsequent voiceprint recognition performed based on the first voiceprint feature library is higher.

In a possible implementation, the first audio segment is a multichannel audio, and in the aspect of determining a voiceprint feature of the first audio segment, and searching the first voiceprint feature library for the voiceprint feature of the first audio segment, the generation unit 1203 is specifically configured to:
perform sound source separation on the first audio segment to obtain a plurality of mono audios, where each mono audio is an audio of a speaker, and then determine a voiceprint feature of each mono audio; and
search the first voiceprint feature library for voiceprint features of the plurality of mono audios.

It may be understood that, when the first audio segment is a multichannel audio, sound source separation is performed on the first audio segment, and voiceprint recognition is performed on each mono audio obtained through separation, so that a correspondence between a statement and a speaker in a conference can be determined more accurately.

It should be noted that, for implementations and beneficial effects of the units, refer to corresponding descriptions in the method embodiments shown in FIG. 3 to FIG. 10.

FIG. 13 is a schematic diagram of a structure of a conference information processing apparatus 130 according to an embodiment of the present invention. The conference information processing apparatus 130 may be the conference information processing device described above or a component in the conference information processing device. The conference information processing apparatus 130 is applied to a conference system, and may include a receiving unit 1301, a segmentation unit 1302, a recognition unit 1303, and a generation unit 1304. Detailed descriptions of the units are as follows:

The receiving unit 1301 is configured to receive a conference audio and first additional information corresponding to a plurality of audio segments that are sent by a conference terminal in a first conference site, where the conference audio is recorded by the conference terminal in a conference process, the plurality of audio segments are obtained by performing speech segmentation on the conference audio or are collected based on a sound source direction in the first conference site, first additional information corresponding to each audio segment includes information used to determine a speaker identity corresponding to the audio segment and identification information of the corresponding audio segment, and sound source directions of two audio segments that are adjacent in a time sequence are different. For example, an audio direction in a period from the 0^{th} minute to the 6^{th} minute in the conference audio is a direction 1, an audio direction in a period from the 6^{th} minute to the 10^{th} minute in the conference audio is a direction 2, and an audio direction in a period from the 10^{th} minute to the 15^{th} minute in the conference audio is a direction 3. Therefore, the conference information processing device uses an audio from the 0^{th} minute to the 6^{th} minute as an audio segment through segmentation, uses an audio from the 6^{th} minute to the 10^{th} minute as an audio segment through segmentation, and uses an audio from the 10^{th} minute to the 15^{th} minute as an audio segment through segmentation. It may be understood that the plurality of audio segments may be obtained through segmentation in this manner.

The segmentation unit 1302 is configured to perform speech segmentation on the conference audio to obtain the plurality of audio segments.

The recognition unit 1303 is configured to perform voiceprint recognition on the plurality of audio segments obtained through speech segmentation to obtain second additional information corresponding to each of the plurality of audio segments, where the second additional information corresponding to each audio segment includes information used to determine a speaker identity corresponding to the audio segment and identification information of the corresponding audio segment. Optionally, the identification information may be a timestamp, and a timestamp corresponding to each audio segment includes a start time point and an end time point of the audio segment. Optionally, the identification information may also be generated according to a preset rule. It should be noted that the audio segments obtained by the conference information processing device through segmentation may be the same as or different from audio segments obtained by the conference terminal through segmentation. For example, the audio segments obtained by the conference terminal through segmentation may be S1, S2, S3, and S4, and the audio segments obtained by the conference information processing device through segmentation are S1, S2, S3, S4, and S5. A same part (that is, the plurality of audio segments) in the audio segments obtained by the conference terminal and the conference information processing device through segmentation is mainly described in the embodiments of this application. A processing manner of another audio segment is not limited herein.

The generation unit 1304 is configured to generate a correspondence between a participant and a statement in the first conference site based on the first additional information and the second additional information. The correspondence may be a correspondence between all participants who have spoken and statements, or may be a correspondence between a participant who has spoken more and a statement, or certainly may be another case.

According to the foregoing method, the conference terminal obtains the conference audio and the audio segment in the conference process, identifies, based on each audio segment, information used to determine a speaker identity corresponding to the audio segment, and then sends, to the conference information processing device, the conference audio and the identified information used to determine the speaker identity corresponding to the audio segment. The conference information processing device may also segment the conference audio to obtain the plurality of audio segments, identify information used to determine a speaker identity corresponding to each audio segment, and then determine, based on the information that is identified by the conference information processing device and that is used to determine the speaker identity corresponding to each audio segment and the received information used to determine the speaker identity corresponding to each audio segment, a speaker corresponding to each segment. In a manner of jointly determining the speaker identity by the conference terminal and the conference information processing device, the determined speaker identity can be more accurate. In addition, because both the conference terminal and the conference information processing device perform identification, the conference terminal and the conference information processing device may perform identification based on respective information bases, and do not need to merge the information bases of the conference terminal and the conference information processing device together, to prevent information leakage of each other and effectively protect privacy security of a participant.

In a possible implementation, in the aspect of generating a correspondence between each participant and a statement in the first conference site based on the first additional information and the second additional information, the generation unit 1304 is specifically configured to:
determine, based on information (for example, including a face ID) that is used to determine a speaker identity and that is in first additional information corresponding to a first audio segment and information (for example, including a voiceprint ID) that is used to determine a speaker identity and that is in second additional information corresponding to the first audio segment, a speaker identity corresponding to the first audio segment. Optionally, when the speaker identity still cannot be uniquely determined based on the first additional information and the second additional information corresponding to the first audio segment, further determining may be performed based on an audio segment similar to the first audio segment. For example, a voiceprint ID and a face ID are identified for a second audio segment, a voiceprint ID is identified for the first audio segment but a face ID is not identified, and the voiceprint ID identified for the first audio segment is the same as the voiceprint ID identified for the second audio segment. Therefore, it may be considered that the second audio segment and the first audio segment are similar, and therefore it is considered that the face ID corresponding to the first audio segment is the same as the face ID corresponding to the second audio segment. In this way, face identities corresponding to the first audio segment and the second audio segment are also the same. Optionally, when the conference information processing device obtains sound source direction information, for a function of the sound source direction information, reference may be made to a function of the voiceprint ID herein. The first audio segment is one of the plurality of audio segments. For a processing manner of another audio segment in the plurality of audio segments, refer to a processing manner of the first audio segment.

The generation unit 1304 generates a conference record, where the conference record includes a statement of the first audio segment and the speaker identity corresponding to the first audio segment.

In a possible implementation, the conference system further includes a second voiceprint feature library, and the second voiceprint feature library includes voiceprint features; and in the aspect of performing voiceprint recognition on the plurality of audio segments obtained through speech segmentation to obtain second additional information corresponding to each of the plurality of audio segments, the recognition unit 1303 is specifically configured to:
determine a voiceprint feature of the first audio segment, and search the second voiceprint feature library for the voiceprint feature of the first audio segment, where the second additional information includes a matching result of the voiceprint matching and identification information of the first audio segment, and the first audio segment is one of the plurality of audio segments.

In this implementation, a voiceprint of the audio segment is recognized based on the voiceprint feature library, to preliminarily obtain the information used to determine the speaker identity, which can improve accuracy of subsequently determining the speaker identity.

In a possible implementation, the first audio segment is a multisource segment, and in the aspect of determining a voiceprint feature of the first audio segment, and searching the second voiceprint feature library for the voiceprint feature of the first audio segment, the recognition unit 1303 is specifically configured to:
perform sound source separation on the first audio segment to obtain a plurality of mono audios; and
determine a voiceprint feature of each mono audio, and search the second voiceprint feature library for voiceprint features of the plurality of mono audios.

It may be understood that, when the first audio segment is a multichannel audio, sound source separation is performed on the first audio segment, and voiceprint recognition is performed on each mono audio obtained through separation, so that a correspondence between a statement and a speaker in a conference can be determined more accurately.

In a possible implementation, the first additional information corresponding to the first audio segment includes a facial recognition result and/or a voiceprint recognition result of the first audio segment and identification information of the first audio segment, and the first audio segment is one of the plurality of audio segments.

It should be noted that, for implementations and beneficial effects of the units, refer to corresponding descriptions in the method embodiments shown in FIG. 3 to FIG. 10.

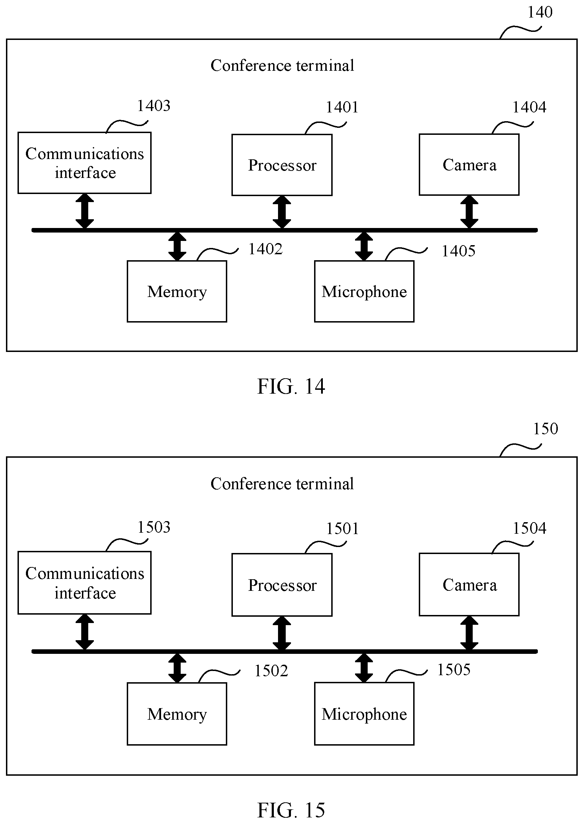

FIG. 14 shows a conference terminal 140 according to an embodiment of the present invention. The conference terminal 140 includes a processor 1401, a memory 1402, and a communications interface 1403. The processor 1401, the memory 1402, the communications interface 1403, a camera 1404, and a microphone 1405 are connected to each other through a bus. Certainly, the camera 1404 and the microphone 1405 may also be externally connected to the conference terminal 140.

The camera 1404 is configured to collect a facial image or other image information in a conference process. The camera 1404 may also be a camera module, and the camera may also be referred to as a photographing apparatus.

The microphone 1405 is configured to collect audio information in the conference process, for example, the conference audio and the audio segment mentioned above. The microphone 1405 may also be an array microphone, and the microphone 1405 may also be referred to as a recording apparatus, a recording device, or the like.

The memory 1402 includes but is not limited to a Random Access Memory (RAM), a Read-Only Memory (ROM), an Erasable Programmable Read-Only Memory (EPROM), or a Compact Disc Read-Only Memory (CD-ROM). The memory 1402 is configured to store related instructions and data. The communications interface 1403 is configured to: receive and send data.

The processor 1401 may be one or more Central Processing Units (CPUs). When the processor 1401 is a CPU, the CPU may be a single-core CPU or a multi-core CPU.

The processor 1401 in the conference terminal 140 is configured to read program code stored in the memory 1402, to perform the following operations:

The processor 1401 collects an audio segment in a first conference site based on a sound source direction in a conference process, where sound source directions of two audio segments that are adjacent in a time sequence are different. In a specific implementation, the conference terminal may continuously detect the sound source direction in the conference process (for example, may detect the sound source direction based on a preset frequency). When the sound source direction changes, the conference terminal starts to collect a next audio segment. For example, an audio direction in a conference period from the 0^{th} minute to the 6^{th} minute is a direction 1, an audio direction in a conference period from the 6^{th} minute to the 10^{th} minute is a direction 2, and an audio direction in a conference period from the 10^{th} minute to the 15^{th} minute is a direction 3. Therefore, the conference terminal collects an audio from the 0^{th} minute to the 6^{th} minute and uses the audio as an audio segment, collects an audio from the 6^{th} minute to the 10^{th} minute and uses the audio as an audio segment, and collects an audio from the 10^{th} minute to the 15^{th} minute and uses the audio as an audio segment. It may be understood that a plurality of audio segments may be collected in this manner.

The processor 1401 generates first additional information corresponding to each of a plurality of collected audio segments, where the first additional information corresponding to each audio segment includes information used to determine a speaker identity corresponding to the audio segment and identification information of the corresponding audio segment. Optionally, the identification information may be a timestamp, and a timestamp corresponding to each audio segment includes a start time point and an end time point of the audio segment. Optionally, the identification information may also be generated according to a preset rule. Therefore, a conference information processing device may also process a corresponding identifier according to the preset rule, to determine which segment in a conference is an audio segment identified by the identification information.

The processor 1401 sends, to the conference information processing device through the communications interface 1403, a conference audio recorded in the conference process and first additional information corresponding to the plurality of audio segments, where the conference audio is segmented (for example, is segmented based on the sound source direction, so that sound source directions of two audio segments that are adjacent in a time sequence and that are obtained through segmentation are different) by the conference information processing device into a plurality of audio segments and corresponding second additional information is attached to the plurality of audio segments, second additional information corresponding to each audio segment includes information used to determine a speaker identity corresponding to the audio segment and identification information of the corresponding audio segment, and the first additional information and the second additional information are used by the conference information processing device to generate a correspondence between a participant and a statement in the first conference site. The correspondence may be a correspondence between all participants who have spoken and statements, or may be a correspondence between a participant who has spoken more and a statement, or certainly may be another case.

It can be learned that the conference terminal obtains the conference audio and the audio segment in the conference process, identifies, based on each audio segment, information used to determine a speaker identity corresponding to the audio segment, and then sends, to the conference information processing device, the conference audio and the identified information used to determine the speaker identity corresponding to the audio segment. The conference information processing device may also segment the conference audio to obtain the plurality of audio segments, identify information used to determine a speaker identity corresponding to each audio segment, and then determine, based on the information that is identified by the conference information processing device and that is used to determine the speaker identity corresponding to each audio segment and the received information used to determine the speaker identity corresponding to each audio segment, a speaker corresponding to each segment. In a manner of jointly determining the speaker identity by the conference terminal and the conference information processing device, the determined speaker identity can be more accurate. In addition, because both the conference terminal and the conference information processing device perform identification, the conference terminal and the conference information processing device may perform identification based on respective information bases, and do not need to merge the information bases of the conference terminal and the conference information processing device together, to prevent information leakage of each other and effectively protect privacy security of a participant.

In a possible implementation, the conference system further includes a facial feature library, and the facial feature library includes facial features; and in the aspect of generating first additional information corresponding to each of a plurality of collected audio segments, the processor is specifically configured to:
perform facial recognition on a target image based on the facial feature library, where the target image is a facial image that is in a sound source direction of a first audio segment and that is captured (for example, captured by using a director camera, a camera, or a camera module) in a process of recording the first audio segment, and the first audio segment is one of the plurality of audio segments; and for a processing manner of another audio segment in the plurality of audio segments, refer to a processing manner of the first audio segment; and
generate first additional information corresponding to the first audio segment, where the first additional information corresponding to the first audio segment includes a recognition result of the facial recognition and identification information of the first audio segment. The recognition result herein may include a face ID used to identify a facial feature, and facial features identified by different face IDs are different. Optionally, the recognition result may further include a face identity used to identify a specific person. It should be noted that there may be a case in which facial recognition is performed but a facial feature is not recognized. In this case, the recognition result may be null, or may be content filled according to a preset rule.

In this implementation, the facial image in the sound source direction of the audio segment is recognized based on the facial feature library, to preliminarily obtain the information used to determine the speaker identity, which can improve accuracy of subsequently determining the speaker identity.

In a possible implementation, the conference system further includes a first voiceprint feature library, and the first voiceprint feature library includes voiceprint features; and in the aspect of generating first additional information corresponding to each of a plurality of collected audio segments, the processor is specifically configured to:
determine a voiceprint feature of a first audio segment, and search the first voiceprint feature library for the voiceprint feature of the first audio segment, where the first audio segment is one of the plurality of audio segments; and for a processing manner of another audio segment in the plurality of audio segments, refer to a processing manner of the first audio segment; and
generate first additional information corresponding to the first audio segment, where the first additional information corresponding to the first audio segment includes a matching result of the voiceprint matching and identification information of the first audio segment. The matching result herein may be a voiceprint ID used to identify a voiceprint feature, and voiceprint features identified by different voiceprint IDs are different. It should be noted that there may be a case in which voiceprint recognition (or matching) is performed but a voiceprint feature is not recognized. In this case, the matching result may be null, or may be content filled according to a preset rule.

In this implementation, a voiceprint of the audio segment is recognized based on the voiceprint feature library, to preliminarily obtain the information used to determine the speaker identity, which can improve accuracy of subsequently determining the speaker identity.

In a possible implementation, the conference system further includes a facial feature library and a first voiceprint feature library, the facial feature library includes facial features, and the first voiceprint feature library includes voiceprint features; and in the aspect of generating first additional information corresponding to each of a plurality of collected audio segments, the processor is specifically configured to:
perform facial recognition on a target image based on the facial feature library, where the target image is an image that is in a sound source direction of a first audio segment and that is captured (for example, captured by using a director camera, a camera, or a camera module) in a process of recording the first audio segment, and the first audio segment is one of the plurality of audio segments; and for a processing manner of another audio segment in the plurality of audio segments, refer to a processing manner of the first audio segment;
determine a voiceprint feature of the first audio segment, and search the first voiceprint feature library for the voiceprint feature of the first audio segment; and
generate first additional information corresponding to the first audio segment, where the first additional information corresponding to the first audio segment includes a recognition result of the facial recognition, a matching result of the voiceprint matching, and identification information of the first audio segment. The recognition result herein may include a face ID used to identify a facial feature, and facial features identified by different face IDs are different. Optionally, the recognition result may further include a face identity used to identify a specific person. It should be noted that there may be a case in which facial recognition is performed but a facial feature is not recognized. In this case, the recognition result may be null, or may be content filled according to a preset rule. The matching result herein may be a voiceprint ID used to identify a voiceprint feature, and voiceprint features identified by different voiceprint IDs are different. It should be noted that there may be a case in which voiceprint recognition (or matching) is performed but a voiceprint feature is not recognized. In this case, the matching result may be null, or may be content filled according to a preset rule.

In this implementation, a voiceprint of the audio segment is recognized based on the voiceprint feature library, and the facial image in the sound source direction of the audio segment is recognized based on the facial feature library, to preliminarily obtain the information used to determine the speaker identity. A combination of the information in the two aspects can improve accuracy of subsequently determining the speaker identity.

In a possible implementation, the processor is further configured to:
if the voiceprint feature of the first audio segment is not found from the first voiceprint feature library, store the voiceprint feature of the first audio segment into the first voiceprint feature library, where optionally, after a quantity of audio segments in a sound source direction is accumulated to some extent, a voiceprint feature (that is, a voiceprint feature corresponding to the sound source direction) that can be distinguished from a voiceprint feature of another user may be determined based on the accumulated audio segments. In this manner, the first voiceprint feature library can be continuously enriched and improved, so that accuracy of subsequent voiceprint recognition performed based on the first voiceprint feature library is higher.

In a possible implementation, the first audio segment is a multichannel audio, and in the aspect of determining a voiceprint feature of the first audio segment, and searching the first voiceprint feature library for the voiceprint feature of the first audio segment, the processor is specifically configured to:
perform sound source separation on the first audio segment to obtain a plurality of mono audios, where each mono audio is an audio of a speaker, and then determine a voiceprint feature of each mono audio; and
search the first voiceprint feature library for voiceprint features of the plurality of mono audios.

It may be understood that, when the first audio segment is a multichannel audio, sound source separation is performed on the first audio segment, and voiceprint recognition is performed on each mono audio obtained through separation, so that a correspondence between a statement and a speaker in a conference can be determined more accurately.

It should be noted that, for implementations and beneficial effects of the operations, refer to corresponding descriptions in the method embodiments shown in FIG. 3 to FIG. 10.

FIG. 15 shows a conference terminal 150 according to an embodiment of the present invention. The conference terminal 150 includes a processor 1501, a memory 1502, and a communications interface 1503. The processor 1501, the memory 1502, the communications interface 1503, a camera 1504, and a microphone 1505 are connected to each other through a bus. Certainly, the camera 1504 and the microphone 1505 may also be externally connected to the conference terminal 150.

The camera 1504 is configured to collect a facial image or other image information in a conference process. The camera 1504 may also be a camera module, and the camera may also be referred to as a photographing apparatus.

The microphone 1505 is configured to collect audio information in the conference process, for example, the conference audio and the audio segment mentioned above. The microphone 1505 may also be an array microphone, and the microphone 1505 may also be referred to as a recording apparatus, a recording device, or the like.

The memory 1502 includes but is not limited to a Random Access Memory (RAM), a Read-Only Memory (ROM), an Erasable Programmable Read-Only Memory (EPROM), or a Compact Disc Read-Only Memory (CD-ROM). The memory 1502 is configured to store related instructions and data. The communications interface 1503 is configured to: receive and send data.

The processor 1501 may be one or more Central Processing Units (CPUs). When the processor 1501 is a CPU, the CPU may be a single-core CPU or a multi-core CPU.

The processor 1501 in the conference terminal 150 is configured to read program code stored in the memory 1502, to perform the following operations:

The processor 1501 collects a conference audio in a first conference site in a conference process.

The processor 1501 performs speech segmentation on the conference audio based on a sound source direction in the conference audio to obtain a plurality of audio segments, where sound source directions of two audio segments that are adjacent in a time sequence are different. In a specific implementation, the conference terminal may continuously detect the sound source direction in the conference process (for example, may detect the sound source direction based on a preset frequency). When the sound source direction changes, the conference terminal starts to collect a next audio segment. For example, an audio direction in a conference period from the 0^{th} minute to the 6^{th} minute is a direction 1, an audio direction in a conference period from the 6^{th} minute to the 10^{th} minute is a direction 2, and an audio direction in a conference period from the 10^{th} minute to the 15^{th} minute is a direction 3. Therefore, the conference terminal collects an audio from the 0^{th} minute to the 6^{th} minute and uses the audio as an audio segment, collects an audio from the 6^{th} minute to the 10^{th} minute and uses the audio as an audio segment, and collects an audio from the 10^{th} minute to the 15^{th} minute and uses the audio as an audio segment. It may be understood that a plurality of audio segments may be collected in this manner.

The processor 1501 generates first additional information corresponding to each of the plurality of audio segments, where the first additional information corresponding to each audio segment includes information used to determine a speaker identity corresponding to the audio segment and identification information of the corresponding audio segment. Optionally, the identification information may be a timestamp, and a timestamp corresponding to each audio segment includes a start time point and an end time point of the audio segment. Optionally, the identification information may also be generated according to a preset rule. Therefore, a conference information processing device may also process a corresponding identifier according to the preset rule, to determine which segment in a conference is an audio segment identified by the identification information.

The processor 1501 sends, to the conference information processing device through the communications interface 1503, the conference audio and first additional information corresponding to the plurality of audio segments, where the conference audio is segmented by the conference information processing device into the plurality of audio segments and corresponding second additional information is attached to the plurality of audio segments, second additional information corresponding to each audio segment includes information used to determine a speaker identity corresponding to the audio segment and identification information of the corresponding audio segment, and the first additional information and the second additional information are used by the conference information processing device to generate a correspondence between a participant and a statement in the first conference site. The correspondence may be a correspondence between all participants who have spoken and statements, or may be a correspondence between a participant who has spoken more and a statement, or certainly may be another case.

It can be learned that the conference terminal obtains the conference audio and the audio segment in the conference process, identifies, based on each audio segment, information used to determine a speaker identity corresponding to the audio segment, and then sends, to the conference information processing device, the conference audio and the identified information used to determine the speaker identity corresponding to the audio segment. The conference information processing device may also segment the conference audio to obtain the plurality of audio segments, identify information used to determine a speaker identity corresponding to each audio segment, and then determine, based on the information that is identified by the conference information processing device and that is used to determine the speaker identity corresponding to each audio segment and the received information used to determine the speaker identity corresponding to each audio segment, a speaker corresponding to each segment. In a manner of jointly determining the speaker identity by the conference terminal and the conference information processing device, the determined speaker identity can be more accurate. In addition, because both the conference terminal and the conference information processing device perform identification, the conference terminal and the conference information processing device may perform identification based on respective information bases, and do not need to merge the information bases of the conference terminal and the conference information processing device together, to prevent information leakage of each other and effectively protect privacy security of a participant.

In a possible implementation, the conference system further includes a facial feature library, and the facial feature library includes facial features; and in the aspect of generating first additional information corresponding to each of the plurality of audio segments, the processor is specifically configured to:
perform facial recognition on a target image based on the facial feature library, where the target image is a facial image that is in a sound source direction of a first audio segment and that is captured (for example, captured by using a director camera, a camera, or a camera module) in a process of recording the first audio segment, and the first audio segment is one of the plurality of audio segments; and for a processing manner of another audio segment in the plurality of audio segments, refer to a processing manner of the first audio segment; and
generate first additional information corresponding to the first audio segment, where the first additional information corresponding to the first audio segment includes a recognition result of the facial recognition and identification information of the first audio segment. The recognition result herein may include a face ID used to identify a facial feature, and facial features identified by different face IDs are different. Optionally, the recognition result may further include a face identity used to identify a specific person. It should be noted that there may be a case in which facial recognition is performed but a facial feature is not recognized. In this case, the recognition result may be null, or may be content filled according to a preset rule.

In this implementation, the facial image in the sound source direction of the audio segment is recognized based on the facial feature library, to preliminarily obtain the information used to determine the speaker identity, which can improve accuracy of subsequently determining the speaker identity.

In a possible implementation, the conference system further includes a first voiceprint feature library, and the first voiceprint feature library includes voiceprint features; and in the aspect of generating first additional information corresponding to each of the plurality of audio segments, the processor is specifically configured to:
determine a voiceprint feature of a first audio segment, and search the first voiceprint feature library for the voiceprint feature of the first audio segment, where the first audio segment is one of the plurality of audio segments; and for a processing manner of another audio segment in the plurality of audio segments, refer to a processing manner of the first audio segment; and
generate first additional information corresponding to the first audio segment, where the first additional information corresponding to the first audio segment includes a matching result of the voiceprint matching and identification information of the first audio segment. The matching result herein may be a voiceprint ID used to identify a voiceprint feature, and voiceprint features identified by different voiceprint IDs are different. It should be noted that there may be a case in which voiceprint recognition (or matching) is performed but a voiceprint feature is not recognized. In this case, the matching result may be null, or may be content filled according to a preset rule.

In this implementation, a voiceprint of the audio segment is recognized based on the voiceprint feature library, to preliminarily obtain the information used to determine the speaker identity, which can improve accuracy of subsequently determining the speaker identity.

In a possible implementation, the conference system further includes a facial feature library and a first voiceprint feature library, the facial feature library includes facial features, and the first voiceprint feature library includes voiceprint features; and in the aspect of generating first additional information corresponding to each of the plurality of audio segments, the processor is specifically configured to:
perform facial recognition on a target image based on the facial feature library, where the target image is an image that is in a sound source direction of a first audio segment and that is captured (for example, captured by using a director camera, a camera, or a camera module) in a process of recording the first audio segment, and the first audio segment is one of the plurality of audio segments; and for a processing manner of another audio segment in the plurality of audio segments, refer to a processing manner of the first audio segment;
determine a voiceprint feature of the first audio segment, and search the first voiceprint feature library for the voiceprint feature of the first audio segment; and
generate first additional information corresponding to the first audio segment, where the first additional information corresponding to the first audio segment includes a recognition result of the facial recognition, a matching result of the voiceprint matching, and identification information of the first audio segment. The recognition result herein may include a face ID used to identify a facial feature, and facial features identified by different face IDs are different. Optionally, the recognition result may further include a face identity used to identify a specific person. It should be noted that there may be a case in which facial recognition is performed but a facial feature is not recognized. In this case, the recognition result may be null, or may be content filled according to a preset rule. The matching result herein may be a voiceprint ID used to identify a voiceprint feature, and voiceprint features identified by different voiceprint IDs are different. It should be noted that there may be a case in which voiceprint recognition (or matching) is performed but a voiceprint feature is not recognized. In this case, the matching result may be null, or may be content filled according to a preset rule.

In this implementation, a voiceprint of the audio segment is recognized based on the voiceprint feature library, and the facial image in the sound source direction of the audio segment is recognized based on the facial feature library, to preliminarily obtain the information used to determine the speaker identity. A combination of the information in the two aspects can improve accuracy of subsequently determining the speaker identity.

In a possible implementation, the processor is further configured to:
if the voiceprint feature of the first audio segment is not found from the first voiceprint feature library, store the voiceprint feature of the first audio segment into the first voiceprint feature library, where optionally, after a quantity of audio segments in a sound source direction is accumulated to some extent, a voiceprint feature (that is, a voiceprint feature corresponding to the sound source direction) that can be distinguished from a voiceprint feature of another user may be determined based on the accumulated audio segments. In this manner, the first voiceprint feature library can be continuously enriched and improved, so that accuracy of subsequent voiceprint recognition performed based on the first voiceprint feature library is higher.

In a possible implementation, the first audio segment is a multichannel audio, and in the aspect of determining a voiceprint feature of the first audio segment, and searching the first voiceprint feature library for the voiceprint feature of the first audio segment, the processor is specifically configured to:
perform sound source separation on the first audio segment to obtain a plurality of mono audios, where each mono audio is an audio of a speaker, and then determine a voiceprint feature of each mono audio; and
search the first voiceprint feature library for voiceprint features of the plurality of mono audios.

It may be understood that, when the first audio segment is a multichannel audio, sound source separation is performed on the first audio segment, and voiceprint recognition is performed on each mono audio obtained through separation, so that a correspondence between a statement and a speaker in a conference can be determined more accurately.

It should be noted that, for implementations and beneficial effects of the operations, refer to corresponding descriptions in the method embodiments shown in FIG. 3 to FIG. 10.

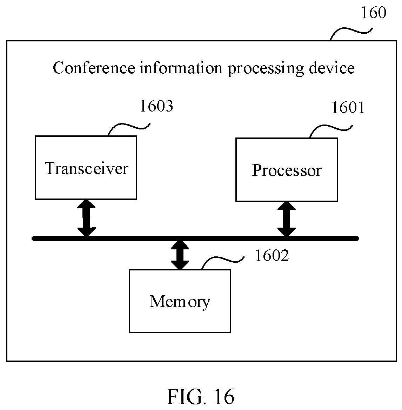

FIG. 16 shows a conference information processing device 160 according to an embodiment of the present invention. The conference information processing device 160 includes a processor 1601, a memory 1602, and a communications interface 1603. The processor 1601, the memory 1602, and the communications interface 1603 are connected to each other through a bus.

The memory 1602 includes but is not limited to a Random Access Memory (RAM), a Read-Only Memory (ROM), an Erasable Programmable Read-Only Memory (EPROM), or a Compact Disc Read-Only Memory (CD-ROM). The memory 1602 is configured to store related instructions and data. The communications interface 1603 is configured to: receive and send data.

The processor 1601 may be one or more Central Processing Units (CPUs). When the processor 1601 is a CPU, the CPU may be a single-core CPU or a multi-core CPU.

The processor 1601 in the conference information processing device 160 is configured to read program code stored in the memory 1602, to perform the following operations:

The processor 1601 receives, through the communications interface 1603, a conference audio and first additional information corresponding to a plurality of audio segments that are sent by a conference terminal in a first conference site, where the conference audio is recorded by the conference terminal in a conference process, the plurality of audio segments are obtained by performing speech segmentation on the conference audio or are collected based on a sound source direction in the first conference site, first additional information corresponding to each audio segment includes information used to determine a speaker identity corresponding to the audio segment and identification information of the corresponding audio segment, and sound source directions of two audio segments that are adjacent in a time sequence are different. For example, an audio direction in a period from the 0^{th} minute to the 6^{th} minute in the conference audio is a direction 1, an audio direction in a period from the 6^{th} minute to the 10^{th} minute in the conference audio is a direction 2, and an audio direction in a period from the 10^{th} minute to the 15^{th} minute in the conference audio is a direction 3. Therefore, the conference information processing device uses an audio from the 0^{th} minute to the 6^{th} minute as an audio segment through segmentation, uses an audio from the 6^{th} minute to the 10^{th} minute as an audio segment through segmentation, and uses an audio from the 10^{th} minute to the 15^{th} minute as an audio segment through segmentation. It may be understood that the plurality of audio segments may be obtained through segmentation in this manner.

The processor 1601 performs speech segmentation on the conference audio to obtain the plurality of audio segments.

The processor 1601 performs voiceprint recognition on the plurality of audio segments obtained through speech segmentation to obtain second additional information corresponding to each of the plurality of audio segments, where the second additional information corresponding to each audio segment includes information used to determine a speaker identity corresponding to the audio segment and identification information of the corresponding audio segment. Optionally, the identification information may be a timestamp, and a timestamp corresponding to each audio segment includes a start time point and an end time point of the audio segment. Optionally, the identification information may also be generated according to a preset rule. It should be noted that the audio segments obtained by the conference information processing device through segmentation may be the same as or different from audio segments obtained by the conference terminal through segmentation. For example, the audio segments obtained by the conference terminal through segmentation may be S1, S2, S3, and S4, and the audio segments obtained by the conference information processing device through segmentation are S1, S2, S3, S4, and S5. A same part (that is, the plurality of audio segments) in the audio segments obtained by the conference terminal and the conference information processing device through segmentation is mainly described in the embodiments of this application. A processing manner of another audio segment is not limited herein.

The processor 1601 generates a correspondence between a participant and a statement in the first conference site based on the first additional information and the second additional information. The correspondence may be a correspondence between all participants who have spoken and statements, or may be a correspondence between a participant who has spoken more and a statement, or certainly may be another case.

It can be learned that the conference terminal obtains the conference audio and the audio segment in the conference process, identifies, based on each audio segment, information used to determine a speaker identity corresponding to the audio segment, and then sends, to the conference information processing device, the conference audio and the identified information used to determine the speaker identity corresponding to the audio segment. The conference information processing device may also segment the conference audio to obtain the plurality of audio segments, identify information used to determine a speaker identity corresponding to each audio segment, and then determine, based on the information that is identified by the conference information processing device and that is used to determine the speaker identity corresponding to each audio segment and the received information used to determine the speaker identity corresponding to each audio segment, a speaker corresponding to each segment. In a manner of jointly determining the speaker identity by the conference terminal and the conference information processing device, the determined speaker identity can be more accurate. In addition, because both the conference terminal and the conference information processing device perform identification, the conference terminal and the conference information processing device may perform identification based on respective information bases, and do not need to merge the information bases of the conference terminal and the conference information processing device together, to prevent information leakage of each other and effectively protect privacy security of a participant.

In a possible implementation, in the aspect of generating a correspondence between each participant and a statement in the first conference site based on the first additional information and the second additional information, the processor is specifically configured to:
determine, based on information (for example, including a face ID) that is used to determine a speaker identity and that is in first additional information corresponding to a first audio segment and information (for example, including a voiceprint ID) that is used to determine a speaker identity and that is in second additional information corresponding to the first audio segment, a speaker identity corresponding to the first audio segment. Optionally, when the speaker identity still cannot be uniquely determined based on the first additional information and the second additional information corresponding to the first audio segment, further determining may be performed based on an audio segment similar to the first audio segment. For example, a voiceprint ID and a face ID are identified for a second audio segment, a voiceprint ID is identified for the first audio segment but a face ID is not identified, and the voiceprint ID identified for the first audio segment is the same as the voiceprint ID identified for the second audio segment. Therefore, it may be considered that the second audio segment and the first audio segment are similar, and therefore it is considered that the face ID corresponding to the first audio segment is the same as the face ID corresponding to the second audio segment. In this way, face identities corresponding to the first audio segment and the second audio segment are also the same. Optionally, when the conference information processing device obtains sound source direction information, for a function of the sound source direction information, reference may be made to a function of the voiceprint ID herein. The first audio segment is one of the plurality of audio segments. For a processing manner of another audio segment in the plurality of audio segments, refer to a processing manner of the first audio segment.

The processor generates a conference record, where the conference record includes a statement of the first audio segment and the speaker identity corresponding to the first audio segment.

In a possible implementation, the conference system further includes a second voiceprint feature library, and the second voiceprint feature library includes voiceprint features; and in the aspect of performing voiceprint recognition on the plurality of audio segments obtained through speech segmentation to obtain second additional information corresponding to each of the plurality of audio segments, the processor is specifically configured to:
determine a voiceprint feature of the first audio segment, and search the second voiceprint feature library for the voiceprint feature of the first audio segment, where the second additional information includes a matching result of the voiceprint matching and identification information of the first audio segment, and the first audio segment is one of the plurality of audio segments.

In this implementation, a voiceprint of the audio segment is recognized based on the voiceprint feature library, to preliminarily obtain the information used to determine the speaker identity, which can improve accuracy of subsequently determining the speaker identity.

In a possible implementation, the first audio segment is a multisource segment, and in the aspect of determining a voiceprint feature of the first audio segment, and searching the second voiceprint feature library for the voiceprint feature of the first audio segment, the processor is specifically configured to:
perform sound source separation on the first audio segment to obtain a plurality of mono audios; and
determine a voiceprint feature of each mono audio, and search the second voiceprint feature library for voiceprint features of the plurality of mono audios.

It may be understood that, when the first audio segment is a multichannel audio, sound source separation is performed on the first audio segment, and voiceprint recognition is performed on each mono audio obtained through separation, so that a correspondence between a statement and a speaker in a conference can be determined more accurately.

In a possible implementation, the first additional information corresponding to the first audio segment includes a facial recognition result and/or a voiceprint recognition result of the first audio segment and identification information of the first audio segment, and the first audio segment is one of the plurality of audio segments.

It should be noted that, for implementations and beneficial effects of the operations, refer to corresponding descriptions in the method embodiments shown in FIG. 3 to FIG. 10.

An embodiment further provides a chip system. The chip system includes at least one processor, a memory, and an interface circuit. The memory, the interface circuit, and the at least one processor are interconnected through a line, and the at least one memory stores instructions. When the instructions are executed by the processor, the method procedures shown in FIG. 3 to FIG. 10 are implemented.

An embodiment further provides a computer-readable storage medium. The computer-readable storage medium stores instructions, and when the instructions are run on a processor, the method procedures shown in FIG. 3 to FIG. 10 are implemented.

An embodiment further provides a computer program product. When the computer program product runs on a processor, the method procedures shown in FIG. 3 to FIG. 10 are implemented.

A person of ordinary skill in the art may understand that all or some of the procedures of the methods in the foregoing embodiments may be implemented by a computer program instructing related hardware. The program may be stored in a computer-readable storage medium. When the program is executed, the procedures of the methods in the foregoing embodiments may be performed. The foregoing storage medium includes any medium that can store program code, such as a ROM or a random access memory RAM, a magnetic disk, or an optical disc.

## Claims

1. A conference data processing method, applied to a conference system, wherein the conference system comprises a conference terminal (101, 140, 150) and a conference information processing device (102, 160), and the method comprises:
collecting (S301), by the conference terminal (101, 140, 150), an audio segment in a first conference site based on a sound source direction in a conference process, wherein sound source directions of two audio segments that are adjacent in a time sequence are different;
generating (S302), by the conference terminal (101, 140, 150), first additional information corresponding to each of a plurality of collected audio segments, wherein the first additional information corresponding to each audio segment comprises information used to determine a speaker identity corresponding to the audio segment and identification information of the corresponding audio segment; and
sending (S303), by the conference terminal (101, 140, 150) to the conference information processing device (102, 160), a conference audio recorded in the conference process and first additional information corresponding to the plurality of audio segments, wherein
the conference information processing device (102, 160) determines whether a plurality of speakers speak simultaneously in the audio segment;
if it is determined that a plurality of speakers speak simultaneously in the audio segment, the conference information processing device (102, 160) performs blind source separation on the audio segment to separate the audio segment into one or more mono audio segments;
the conference information processing device (102, 160) performs speech recognition on each mono audio segment obtained through the blind source separation;
and wherein the conference information processing device (102, 160) attaches, to each audio segment, second additional information comprising information used to determine a speaker identity corresponding to the audio segment and identification information of the corresponding audio segment, wherein the conference information processing device generates a correspondence between a participant and a statement based on the first and second additional information.

2. The method according to claim 1, wherein the conference system further comprises a facial feature library, and the facial feature library comprises facial features; and the generating, by the conference terminal (101, 140, 150), first additional information corresponding to each of a plurality of collected audio segments comprises:
performing facial recognition on a target image based on the facial feature library, wherein the target image is a facial image that is in a sound source direction of a first audio segment and that is captured in a process of recording the first audio segment, and the first audio segment is one of the plurality of audio segments; and
generating first additional information corresponding to the first audio segment, wherein the first additional information corresponding to the first audio segment comprises a recognition result of the facial recognition and identification information of the first audio segment.

3. The method according to claim 1, wherein the conference system further comprises a first voiceprint feature library, and the first voiceprint feature library comprises voiceprint features; and the generating, by the conference terminal (101, 140, 150), first additional information corresponding to each of a plurality of collected audio segments comprises:
determining a voiceprint feature of a first audio segment, and searching the first voiceprint feature library for the voiceprint feature of the first audio segment, wherein the first audio segment is one of the plurality of audio segments; and
generating first additional information corresponding to the first audio segment, wherein the first additional information corresponding to the first audio segment comprises a matching result of the voiceprint matching and identification information of the first audio segment.

4. The method according to claim 1, wherein the conference system further comprises a facial feature library and a first voiceprint feature library, the facial feature library comprises facial features, and the first voiceprint feature library comprises voiceprint features; and the generating, by the conference terminal (101, 140, 150), first additional information corresponding to each of a plurality of collected audio segments comprises:
performing facial recognition on a target image based on the facial feature library, wherein the target image is an image that is in a sound source direction of a first audio segment and that is captured in a process of recording the first audio segment, and the first audio segment is one of the plurality of audio segments;
determining a voiceprint feature of the first audio segment, and searching the first voiceprint feature library for the voiceprint feature of the first audio segment; and
generating first additional information corresponding to the first audio segment, wherein the first additional information corresponding to the first audio segment comprises a recognition result of the facial recognition, a matching result of the voiceprint matching, and identification information of the first audio segment.

5. The method according to claim 3 or 4, wherein the first audio segment is a multichannel audio, and the determining a voiceprint feature of the first audio segment, and searching the first voiceprint feature library for the voiceprint feature of the first audio segment comprises:
performing sound source separation on the first audio segment to obtain a plurality of mono audios, and determining a voiceprint feature of each mono audio; and
searching, by the conference terminal (101, 140, 150), the first voiceprint feature library for voiceprint features of the plurality of mono audios.

6. The method according to any one of claims 1 to 5, further comprising:
determining, by the conference information processing device (102, 160) based on information that is used to determine a speaker identity and that is in the first additional information corresponding to the first audio segment and information that is used to determine a speaker identity and that is in second additional information corresponding to the first audio segment, a speaker identity corresponding to the first audio segment, wherein the first audio segment is one of the plurality of audio segments; and
generating, by the conference information processing device (102, 160), a conference record, wherein the conference record comprises a statement of the first audio segment and the speaker identity corresponding to the first audio segment.

7. The method according to any one of claims 1 to 6, wherein the statement comprises at least one of a statement text, a statement speech, and a statement time period.

8. A conference information processing method, applied to a conference system, wherein the conference system comprises a conference terminal (101, 140, 150) and a conference information processing device (102, 160), and the method comprises:
receiving (S304), by the conference information processing device (102, 160), a conference audio and first additional information corresponding to a plurality of audio segments that are sent by the conference terminal (101, 140, 150) in a first conference site, wherein the conference audio is recorded by the conference terminal (101, 140, 150) in a conference process, the plurality of audio segments are obtained by performing speech segmentation on the conference audio or are collected based on a sound source direction in the first conference site, first additional information corresponding to each audio segment comprises information used to determine a speaker identity corresponding to the audio segment and identification information of the corresponding audio segment, and sound source directions of two audio segments that are adjacent in a time sequence are different;
if it is determined that a plurality of speakers speak simultaneously in the audio segment, performing, by the conference information processing device (102, 160), blind source separation on the audio segment to separate the audio segment into one or more mono audio segments;
performing, by the conference information processing device (102, 160), speech recognition on each mono audio segment obtained through the blind source separation;
performing (S306), by the conference information processing device (102, 160), voiceprint recognition on the plurality of audio segments obtained through speech segmentation to obtain second additional information corresponding to each of the plurality of audio segments, wherein the second additional information corresponding to each audio segment comprises information used to determine a speaker identity corresponding to the audio segment and identification information of the corresponding audio segment; and
generating (S307), by the conference information processing device (102, 160), a correspondence between a participant and a statement in the first conference site based on the first additional information and the second additional information.

9. The method according to claim 8, wherein the generating (S307), by the conference information processing device (102, 160), a correspondence between each participant and a statement in the first conference site based on the first additional information and the second additional information comprises:
determining, by the conference information processing device (102, 160) based on information that is used to determine a speaker identity and that is in first additional information corresponding to a first audio segment and information that is used to determine a speaker identity and that is in second additional information corresponding to the first audio segment, a speaker identity corresponding to the first audio segment, wherein the first audio segment is one of the plurality of audio segments; and
generating, by the conference information processing device (102, 160), a conference record, wherein the conference record comprises a statement of the first audio segment and the speaker identity corresponding to the first audio segment.

10. The method according to any one of claims 8 to 9, wherein the first additional information corresponding to the first audio segment comprises a facial recognition result and/or a voiceprint recognition result of the first audio segment and identification information of the first audio segment, and the first audio segment is one of the plurality of audio segments.

11. A conference information processing device (102, 160), comprising a processor (1601), a memory (1602), and a communications interface, wherein the memory (1602) is configured to store a computer program, and the processor (1601) invokes the computer program to perform the following operations:
receiving, through the communications interface, a conference audio and first additional information corresponding to a plurality of audio segments that are sent by a conference terminal (101, 140, 150) in a first conference site, wherein the conference audio is recorded by the conference terminal (101, 140, 150) in a conference process, the plurality of audio segments are obtained by performing speech segmentation on the conference audio or are collected based on a sound source direction in the first conference site, first additional information corresponding to each audio segment comprises information used to determine a speaker identity corresponding to the audio segment and identification information of the corresponding audio segment, and sound source directions of two audio segments that are adjacent in a time sequence are different;
determining whether a plurality of speakers speak simultaneously in the audio segment;
if it is determined that a plurality of speakers speak simultaneously in the audio segment, performing blind source separation on the audio segment to separate the audio segment into one or more mono audio segments;
performing speech recognition on each mono audio segment obtained through the blind source separation;
performing voiceprint recognition on the plurality of audio segments obtained through speech segmentation to obtain second additional information corresponding to each of the plurality of audio segments, wherein the second additional information corresponding to each audio segment comprises information used to determine a speaker identity corresponding to the audio segment and identification information of the corresponding audio segment; and
generating a correspondence between a participant and a statement in the first conference site based on the first additional information and the second additional information.

12. The device according to claim 11, wherein in the aspect of generating a correspondence between each participant and a statement in the first conference site based on the first additional information and the second additional information, the processor (1601) is specifically configured to:
determine, based on information that is used to determine a speaker identity and that is in first additional information corresponding to a first audio segment and information that is used to determine a speaker identity and that is in second additional information corresponding to the first audio segment, a speaker identity corresponding to the first audio segment, wherein the first audio segment is one of the plurality of audio segments; and
generate a conference record, wherein the conference record comprises a statement of the first audio segment and the speaker identity corresponding to the first audio segment.

13. A conference system, comprising a conference terminal (101, 140, 150) and a conference information processing device (102, 160), wherein
the conference terminal (101, 140, 150) comprises a processor (1401, 1501), a memory (1402, 1502), and a communications interface (1403, 1503), wherein the memory (1402, 1502) is configured to store a computer program, and the processor (1401, 1501) invokes the computer program to perform the following operations:
collecting an audio segment in a first conference site based on a sound source direction in a conference process, wherein sound source directions of two audio segments that are adjacent in a time sequence are different;
generating first additional information corresponding to each of a plurality of collected audio segments, wherein the first additional information corresponding to each audio segment comprises information used to determine a speaker identity corresponding to the audio segment and identification information of the corresponding audio segment; and
sending, to a conference information processing device (102, 160) through the communications interface (1403, 1503), a conference audio recorded in the conference process and first additional information corresponding to the plurality of audio segments, wherein the conference information processing device (102, 160) is the conference information processing device (102, 160) according to any one of claims 11 to 12.

## Patentansprüche

1. Konferenzdatenverarbeitungsverfahren, das auf ein Konferenzsystem angewendet wird, wobei das Konferenzsystem ein Konferenzendgerät (101, 140, 150) und eine Konferenzinformationsverarbeitungsvorrichtung (102, 160) umfasst und das Verfahren Folgendes umfasst:
Sammeln (S301) eines Audiosegments an einem ersten Konferenzort durch das Konferenzendgerät (101, 140, 150) basierend auf einer Schallquellenrichtung in einem Konferenzprozess, wobei Schallquellenrichtungen von zwei Audiosegmenten, die in einer Zeitsequenz benachbart sind, unterschiedlich sind;
Erzeugen (S302) erster zusätzlicher Informationen entsprechend jedem einer Vielzahl von gesammelten Audiosegmenten durch das Konferenzendgerät (101, 140, 150), wobei die ersten zusätzlichen Informationen entsprechend jedem Audiosegment Informationen umfassen, die verwendet werden, um eine Sprecheridentität entsprechend dem Audiosegment und Identifikationsinformationen des entsprechenden Audiosegments zu bestimmen; und
Senden (S303) eines in dem Konferenzprozess aufgezeichneten Konferenzaudios und erster zusätzlicher Informationen entsprechend der Vielzahl von Audiosegmenten durch das Konferenzendgerät (101, 140, 150) an die Konferenzinformationsverarbeitungsvorrichtung (102, 160), wobei die Konferenzinformationsverarbeitungsvorrichtung (102, 160) bestimmt, ob eine Vielzahl von Sprechern gleichzeitig in dem Audiosegment spricht;
wenn bestimmt wird, dass eine Vielzahl von Sprechern gleichzeitig in dem Audiosegment spricht, die Konferenzinformationsverarbeitungsvorrichtung (102, 160) eine blinde Quellenaufteilung an dem Audiosegment durchführt, um das Audiosegment in ein oder mehrere Mono-Audiosegmente aufzuteilen;
die Konferenzinformationsverarbeitungsvorrichtung (102, 160) eine Spracherkennung an jedem Mono-Audiosegment durchführt, das über die blinde Quellenaufteilung erlangt wird;
und wobei die Konferenzinformationsverarbeitungsvorrichtung (102, 160) zweite zusätzliche Informationen an jedes Audiosegment anhängt, umfassend Informationen, die zum Bestimmen einer Sprecheridentität entsprechend dem Audiosegment und von Identifikationsinformationen des entsprechenden Audiosegments verwendet werden, wobei die Konferenzinformationsverarbeitungsvorrichtung eine Entsprechung zwischen einem Teilnehmer und einer Aussage basierend auf den ersten und den zweiten zusätzlichen Informationen erzeugt.

2. Verfahren nach Anspruch 1, wobei das Konferenzsystem ferner eine Gesichtsmerkmalbibliothek umfasst, und die Gesichtsmerkmalbibliothek Gesichtsmerkmale umfasst; und das Erzeugen erster zusätzlicher Informationen entsprechend jedem einer Vielzahl von gesammelten Audiosegmenten durch das Konferenzendgerät (101, 140, 150) Folgendes umfasst:
Durchführen einer Gesichtserkennung an einem Zielbild basierend auf der Gesichtsmerkmalsbibliothek, wobei das Zielbild ein Gesichtsbild ist, das sich in einer Schallquellenrichtung eines ersten Audiosegments befindet und das in einem Prozess zum Aufzeichnen des ersten Audiosegments erfasst wird, und das erste Audiosegment eines der Vielzahl von Audiosegmenten ist; und
Erzeugen erster zusätzlicher Informationen entsprechend dem ersten Audiosegment, wobei die ersten zusätzlichen Informationen entsprechend dem ersten Audiosegment ein Erkennungsergebnis der Gesichtserkennung und Identifikationsinformationen des ersten Audiosegments umfassen.

3. Verfahren nach Anspruch 1, wobei das Konferenzsystem ferner eine erste Stimmabdruckmerkmalsbibliothek umfasst, und die erste Stimmabdruckmerkmalsbibliothek Stimmabdruckmerkmale umfasst;
und das Erzeugen erster zusätzlicher Informationen entsprechend jedem einer Vielzahl von gesammelten Audiosegmenten durch das Konferenzendgerät (101, 140, 150) Folgendes umfasst:
Bestimmen eines Stimmabdruckmerkmals eines ersten Audiosegments und Durchsuchen der ersten Stimmabdruckmerkmalsbibliothek nach dem Stimmabdruckmerkmal des ersten Audiosegments, wobei das erste Audiosegment eines der Vielzahl von Audiosegmenten ist; und
Erzeugen erster zusätzlicher Informationen entsprechend dem ersten Audiosegment, wobei die ersten zusätzlichen Informationen entsprechend dem ersten Audiosegment ein Anpassungsergebnis der Stimmabdruckanpassung und Identifikationsinformationen des ersten Audiosegments umfassen.

4. Verfahren nach Anspruch 1, wobei das Konferenzsystem ferner eine Gesichtsmerkmalsbibliothek und eine erste Stimmabdruckmerkmalsbibliothek umfasst, die Gesichtsmerkmalsbibliothek Gesichtsmerkmale umfasst, und die erste Stimmabdruckmerkmalsbibliothek Stimmabdruckmerkmale umfasst; und das Erzeugen erster zusätzlicher Informationen entsprechend jedem einer Vielzahl von gesammelten Audiosegmenten durch das Konferenzendgerät (101, 140, 150) Folgendes umfasst:
Durchführen einer Gesichtserkennung an einem Zielbild basierend auf der Gesichtsmerkmalsbibliothek, wobei das Zielbild ein Bild ist, das sich in einer Schallquellenrichtung eines ersten Audiosegments befindet und das in einem Prozess zum Aufzeichnen des ersten Audiosegments erfasst wird, und das erste Audiosegment eines der Vielzahl von Audiosegmenten ist;
Bestimmen eines Stimmabdruckmerkmals des ersten Audiosegments und Durchsuchen der ersten Stimmabdruckmerkmalsbibliothek nach dem Stimmabdruckmerkmal des ersten Audiosegments; und
Erzeugen erster zusätzlicher Informationen entsprechend dem ersten Audiosegment, wobei die ersten zusätzlichen Informationen entsprechend dem ersten Audiosegment ein Erkennungsergebnis der Gesichtserkennung, ein Anpassungsergebnis der Stimmabdruckanpassung und Identifikationsinformationen des ersten Audiosegments umfassen.

5. Verfahren nach Anspruch 3 oder 4, wobei das erste Audiosegment ein Mehrkanalaudio ist, und das Bestimmen eines Stimmabdruckmerkmals des ersten Audiosegments und Durchsuchen der ersten Stimmabdruckmerkmalsbibliothek nach dem Stimmabdruckmerkmal des ersten Audiosegments Folgendes umfasst:
Durchführen einer Schallquellenaufteilung an dem ersten Audiosegment, um eine Vielzahl von Mono-Audios zu erlangen, und Bestimmen eines Stimmabdruckmerkmals von jedem Mono-Audio; und
Durchsuchen der ersten Stimmabdruckmerkmalsbibliothek nach Stimmabdruckmerkmalen der Vielzahl von Mono-Audios durch das Konferenzendgerät (101, 140, 150).

6. Verfahren nach einem der Ansprüche 1 bis 5, ferner umfassend:
Bestimmen einer Sprecheridentität entsprechend dem ersten Audiosegment durch die Konferenzinformationsverarbeitungsvorrichtung (102, 160) basierend auf Informationen, die zum Bestimmen einer Sprecheridentität verwendet werden und die sich in den ersten zusätzlichen Informationen entsprechend dem ersten Audiosegment befinden, und Informationen, die zum Bestimmen einer Sprecheridentität verwendet werden und die sich in zweiten zusätzlichen Informationen entsprechend dem ersten Audiosegment befinden, wobei das erste Audiosegment eines der Vielzahl von Audiosegmenten ist; und
Erzeugen einer Konferenzaufzeichnung durch die Konferenzinformationsverarbeitungsvorrichtung (102, 160), wobei die Konferenzaufzeichnung eine Aussage des ersten Audiosegments und die Sprecheridentität entsprechend dem ersten Audiosegment umfasst.

7. Verfahren nach einem der Ansprüche 1 bis 6, wobei die Aussage mindestens einen Aussagentext, eine Aussagensprache und eine Aussagenzeitspanne umfasst.

8. Konferenzinformationsverarbeitungsverfahren, das auf ein Konferenzsystem angewendet wird, wobei das Konferenzsystem ein Konferenzendgerät (101, 140, 150) und eine Konferenzinformationsverarbeitungsvorrichtung (102, 160) umfasst, und das Verfahren Folgendes umfasst:
Empfangen (S304) eines Konferenzaudios und erster zusätzlicher Informationen entsprechend einer Vielzahl von Audiosegmenten, die durch das Konferenzendgerät (101, 140, 150) an einem ersten Konferenzort gesendet werden, durch die Konferenzinformationsverarbeitungsvorrichtung (102, 160), wobei das Konferenzaudio durch das Konferenzendgerät (101, 140, 150) in einem Konferenzprozess aufgezeichnet wird, die Vielzahl von Audiosegmenten durch Durchführen einer Sprachsegmentierung auf dem Konferenzaudio erlangt wird oder basierend auf einer Schallquellenrichtung an dem ersten Konferenzort gesammelt werden, erste zusätzliche Informationen entsprechend jedem Audiosegment Informationen umfassen, die zum Bestimmen einer Sprecheridentität entsprechend dem Audiosegment und Identifikationsinformationen des entsprechenden Audiosegments verwendet werden, und Schallquellenrichtungen von zwei Audiosegmenten, die in einer Zeitsequenz benachbart sind, unterschiedlich sind;
wenn bestimmt wird, dass eine Vielzahl von Sprechern gleichzeitig in dem Audiosegment spricht, Bestimmen einer blinden Quellenaufteilung durch die Konferenzinformationsverarbeitungsvorrichtung (102, 160) an dem Audiosegment, um das Audiosegment in ein oder mehrere Mono-Audiosegmente aufzuteilen;
Durchführen einer Spracherkennung durch die Konferenzinformationsverarbeitungsvorrichtung (102, 160) an jedem Mono-Audiosegment, das über die blinde Quellenaufteilung erlangt wird;
Durchführen (S306) der Stimmabdruckerkennung durch die Konferenzinformationsverarbeitungsvorrichtung (102, 160) an der Vielzahl von Audiosegmenten, die über Sprachsegmentierung erlangt wird, um zweite zusätzliche Informationen entsprechend jedem der Vielzahl von Audiosegmenten zu erlangen, wobei die zweiten zusätzlichen Informationen entsprechend jedem Audiosegment Informationen umfassen, die verwendet werden, um eine Sprecheridentität entsprechend dem Audiosegment und Identifikationsinformationen des entsprechenden Audiosegments zu bestimmen; und
Erzeugen (S307) einer Entsprechung zwischen einem Teilnehmer und einer Aussage an dem ersten Konferenzort durch die Konferenzinformationsverarbeitungsvorrichtung (102, 160) basierend auf den ersten zusätzlichen Informationen und den zweiten zusätzlichen Informationen.

9. Verfahren nach Anspruch 8, wobei das Erzeugen (S307) einer Entsprechung zwischen jedem Teilnehmer und einer Aussage an dem ersten Konferenzort durch die Konferenzinformationsverarbeitungsvorrichtung (102, 160) basierend auf den ersten zusätzlichen Informationen und den zweiten zusätzlichen Informationen Folgendes umfasst:
Bestimmen einer Sprecheridentität entsprechend dem ersten Audiosegment durch die Konferenzinformationsverarbeitungsvorrichtung (102, 160) basierend auf Informationen, die zum Bestimmen einer Sprecheridentität verwendet werden und die sich in ersten zusätzlichen Informationen entsprechend einem ersten Audiosegment befinden, und Informationen, die zum Bestimmen einer Sprecheridentität verwendet werden und die sich in zweiten zusätzlichen Informationen entsprechend dem ersten Audiosegment befinden, wobei das erste Audiosegment eines der Vielzahl von Audiosegmenten ist; und
Erzeugen einer Konferenzaufzeichnung durch die Konferenzinformationsverarbeitungsvorrichtung (102, 160), wobei die Konferenzaufzeichnung eine Aussage des ersten Audiosegments und die Sprecheridentität entsprechend dem ersten Audiosegment umfasst.

10. Verfahren nach einem der Ansprüche 8 bis 9, wobei die ersten zusätzlichen Informationen entsprechend dem ersten Audiosegment ein Gesichtserkennungsergebnis und/oder ein Stimmabdruckerkennungsergebnis des ersten Audiosegments und Identifikationsinformationen des ersten Audiosegments umfassen, und das erste Audiosegment eines der Vielzahl von Audiosegmenten ist.

11. Konferenzinformationsverarbeitungsvorrichtung (102, 160), umfassend einen Prozessor (1601), einen Speicher (1602) und eine Kommunikationsschnittstelle, wobei der Speicher (1602) dazu konfiguriert ist, ein Computerprogramm zu speichern, und der Prozessor (1601) das Computerprogramm aufruft, um die folgenden Operationen durchzuführen:
Empfangen eines Konferenzaudios und erster zusätzlicher Informationen entsprechend einer Vielzahl von Audiosegmenten, die durch das Konferenzendgerät (101, 140, 150) an einem ersten Konferenzort gesendet werden, über die Kommunikationsschnittstelle, wobei das Konferenzaudio durch ein Konferenzendgerät (101, 140, 150) in einem Konferenzprozess aufgezeichnet wird, die Vielzahl von Audiosegmenten durch Durchführen einer Sprachsegmentierung auf dem Konferenzaudio erlangt wird oder basierend auf einer Schallquellenrichtung an dem ersten Konferenzort gesammelt werden, erste zusätzliche Informationen entsprechend jedem Audiosegment Informationen umfassen, die zum Bestimmen einer Sprecheridentität entsprechend dem Audiosegment und Identifikationsinformationen des entsprechenden Audiosegments verwendet werden, und Schallquellenrichtungen von zwei Audiosegmenten, die in einer Zeitsequenz benachbart sind, unterschiedlich sind;
Bestimmen, ob eine Vielzahl von Sprechern gleichzeitig in dem Audiosegment spricht;
wenn bestimmt wird, dass eine Vielzahl von Sprechern gleichzeitig in dem Audiosegment spricht, Bestimmen einer blinden Quellenaufteilung an dem Audiosegment, um das Audiosegment in ein oder mehrere Mono-Audiosegmente aufzuteilen; Durchführen einer Spracherkennung an jedem Mono-Audiosegment, das über die blinde Quellenaufteilung erlangt wird;
Durchführen der Stimmabdruckerkennung an der Vielzahl von Audiosegmenten, die über Sprachsegmentierung erlangt wird, um zweite zusätzliche Informationen entsprechend jedem der Vielzahl von Audiosegmenten zu erlangen, wobei die zweiten zusätzlichen Informationen entsprechend jedem Audiosegment Informationen umfassen, die verwendet werden, um eine Sprecheridentität entsprechend dem Audiosegment und Identifikationsinformationen des entsprechenden Audiosegments zu bestimmen; und
Erzeugen einer Entsprechung zwischen einem Teilnehmer und einer Aussage an dem ersten Konferenzort basierend auf den ersten zusätzlichen Informationen und den zweiten zusätzlichen Informationen.

12. Vorrichtung nach Anspruch 11, wobei der Prozessor (1601) in dem Aspekt des Erzeugens einer Entsprechung zwischen jedem Teilnehmer und einer Aussage an dem ersten Konferenzort basierend auf den ersten zusätzlichen Informationen und den zweiten zusätzlichen Informationen insbesondere dazu konfiguriert ist:
eine Sprecheridentität entsprechend dem ersten Audiosegment basierend auf Informationen, die zum Bestimmen einer Sprecheridentität verwendet werden und die sich in ersten zusätzlichen Informationen entsprechend einem ersten Audiosegment befinden, und Informationen, die zum Bestimmen einer Sprecheridentität verwendet werden und die sich in zweiten zusätzlichen Informationen entsprechend dem ersten Audiosegment befinden, zu bestimmen, wobei das erste Audiosegment eines der Vielzahl von Audiosegmenten ist; und
eine Konferenzaufzeichnung zu erzeugen, wobei die Konferenzaufzeichnung eine Aussage des ersten Audiosegments und die Sprecheridentität entsprechend dem ersten Audiosegment umfasst.

13. Konferenzsystem, umfassend ein Konferenzendgerät (101, 140, 150) und eine Konferenzinformationsverarbeitungsvorrichtung (102, 160), wobei
das Konferenzendgerät (101, 140, 150) einen Prozessor (1401, 1501), einen Speicher (1402, 1502) und eine Kommunikationsschnittstelle (1403, 1503) umfasst, wobei der Speicher (1402, 1502) dazu konfiguriert ist, ein Computerprogramm zu speichern, und der Prozessor (1401, 1501) das Computerprogramm aufruft, um die folgenden Operationen durchzuführen:
Sammeln eines Audiosegments an einem ersten Konferenzort basierend auf einer Schallquellenrichtung in einem Konferenzprozess, wobei die Schallquellenrichtungen von zwei Audiosegmenten, die in einer Zeitsequenz benachbart sind, unterschiedlich sind;
Erzeugen erster zusätzlicher Informationen entsprechend jedem einer Vielzahl von gesammelten Audiosegmenten, wobei die ersten zusätzlichen Informationen entsprechend jedem Audiosegment Informationen umfassen, die verwendet werden, um eine Sprecheridentität entsprechend dem Audiosegment und Identifikationsinformationen des entsprechenden Audiosegments zu bestimmen; und
Senden eines Konferenzaudios, das in dem Konferenzprozess aufgezeichnet wird, und erster zusätzlicher Informationen entsprechend der Vielzahl von Audiosegmenten über die Kommunikationsschnittstelle (1403, 1503) an eine Konferenzinformationsverarbeitungsvorrichtung (102, 160), wobei die Konferenzinformationsverarbeitungsvorrichtung (102, 160) die Konferenzinformationsverarbeitungsvorrichtung (102, 160) nach einem der Ansprüche 11 bis 12 ist.

## Revendications

1. Procédé pour traiter des données de conférence, appliqué à un système de conférence, dans lequel le système de conférence comprend un terminal de conférence (101, 140, 150) et un dispositif de traitement des informations de conférence (102, 160), et le procédé comprend :
la collecte (S301), par le terminal de conférence (101, 140, 150), d'un segment audio dans un premier site de conférence sur la base d'une direction de source sonore dans un processus de conférence, dans lequel les directions de source sonore de deux segments audio adjacents dans une séquence temporelle sont différentes ;
la génération (S302), par le terminal de conférence (101, 140, 150), des premières informations supplémentaires correspondant à chacun d'une pluralité de segments audio collectés, dans lequel les premières informations supplémentaires correspondant à chaque segment audio comprend des informations utilisées pour déterminer l'identité d'un locuteur correspondant au segment audio et des informations d'identification du segment audio correspondant ; et
l'envoi (S303), par le terminal de conférence (101, 140, 150) au dispositif de traitement des informations de conférence (102, 160), d'un audio de conférence enregistré au cours du processus de conférence et des premières informations supplémentaires correspondant à la pluralité de segments audio, dans lequel le dispositif de traitement des informations de conférence (102, 160) détermine si une pluralité de locuteurs parlent simultanément dans le segment audio ;
s'il est déterminé qu'une pluralité de locuteurs parlent simultanément dans le segment audio, le dispositif de traitement des informations de conférence (102, 160) réalise une séparation aveugle de la source sur le segment audio pour séparer le segment audio en un ou plusieurs segments audio mono ;
le dispositif de traitement des informations de conférence (102, 160) réalise la reconnaissance vocale sur chaque segment audio mono obtenu par séparation aveugle de la source ;
et dans lequel le dispositif de traitement des informations de conférence (102, 160) attache, à chaque segment audio, des secondes informations supplémentaires comprenant des informations utilisées pour déterminer l'identité d'un locuteur correspondant au segment audio et des informations d'identification du segment audio correspondant, dans lequel le dispositif de traitement des informations de conférence génère une correspondance entre un participant et un énoncé sur la base des premières et secondes informations supplémentaires.

2. Procédé selon la revendication 1, dans lequel le système de conférence comprend en outre une bibliothèque de caractéristiques faciales, et la bibliothèque de caractéristiques faciales comprend des caractéristiques faciales ; et la génération, par le terminal de conférence (101, 140, 150), des premières informations supplémentaires correspondant à chacun d'une pluralité de segments audio collectés comprend :
la réalisation d'une reconnaissance faciale sur une image cible sur la base de la bibliothèque de caractéristiques faciales, dans lequel l'image cible est une image faciale située dans la direction de la source sonore d'un premier segment audio et capturée lors du processus d'enregistrement du premier segment audio, et le premier segment audio est l'un de la pluralité de segments audio ; et
la génération des premières informations supplémentaires correspondant au premier segment audio, dans lequel les premières informations supplémentaires correspondant au premier segment audio comprennent un résultat de reconnaissance de la reconnaissance faciale et des informations d'identification du premier segment audio.

3. Procédé selon la revendication 1, dans lequel le système de conférence comprend en outre une première bibliothèque de caractéristiques d'empreinte vocale, et la première bibliothèque de caractéristiques d'empreinte vocale comprend des caractéristiques d'empreinte vocale ; et la génération, par le terminal de conférence (101, 140, 150), des premières informations supplémentaires correspondant à chacun d'une pluralité de segments audio collectés comprend :
la détermination d'une caractéristique d'empreinte vocale d'un premier segment audio et la recherche dans la première bibliothèque de caractéristiques d'empreinte vocale de la caractéristique d'empreinte vocale du premier segment audio, dans lequel le premier segment audio est l'un de la pluralité de segments audio ; et
la génération des premières informations supplémentaires correspondant au premier segment audio, dans lequel les premières informations supplémentaires correspondant au premier segment audio comprennent un résultat de correspondance de la correspondance d'empreinte vocale et des informations d'identification du premier segment audio.

4. Procédé selon la revendication 1, dans lequel le système de conférence comprend en outre une bibliothèque de caractéristiques faciales et une première bibliothèque de caractéristiques d'empreinte vocale, la bibliothèque de caractéristiques faciales comprend des caractéristiques faciales, et la bibliothèque de caractéristiques d'empreinte vocale comprend des caractéristiques d'empreinte vocale ; et la génération, par le terminal de conférence (101, 140, 150), des premières informations supplémentaires correspondant à chacun d'une pluralité de segments audio collectés comprend :
la réalisation d'une reconnaissance faciale sur une image cible sur la base de la bibliothèque de caractéristiques faciales, dans lequel l'image cible est une image située dans la direction de la source sonore d'un premier segment audio et capturée lors du processus d'enregistrement du premier segment audio, et le premier segment audio est l'un de la pluralité de segments audio ;
la détermination d'une caractéristique d'empreinte vocale du premier segment audio et la recherche dans la première bibliothèque de caractéristiques d'empreinte vocale de la caractéristique d'empreinte vocale du premier segment audio ; et
la génération des premières informations supplémentaires correspondant au premier segment audio, dans lequel les premières informations supplémentaires correspondant au premier segment audio comprennent un résultat de reconnaissance de la reconnaissance faciale, un résultat de correspondance de la correspondance d'empreinte vocale et des informations d'identification du premier segment audio.

5. Procédé selon la revendication 3 ou 4, dans lequel le premier segment audio est un audio multicanal, et la détermination d'une caractéristique d'empreinte vocale du premier segment audio, et la recherche dans la première bibliothèque de caractéristiques d'empreinte vocale de la caractéristique d'empreinte vocale du premier segment audio comprend :
la réalisation de la séparation de la source sonore sur le premier segment audio pour obtenir une pluralité d'audio mono, et la détermination d'une caractéristique d'empreinte vocale pour chaque audio mono ; et
la recherche, par le terminal de conférence (101, 140, 150), de la première bibliothèque de caractéristiques d'empreinte vocale pour les caractéristiques d'empreinte vocale de la pluralité d'audio mono.

6. Procédé selon l'une quelconque des revendications 1 à 5, comprenant en outre :
la détermination, par le dispositif de traitement des informations de conférence (102, 160) sur la base des informations utilisées pour déterminer l'identité d'un locuteur et qui figurent dans les premières informations supplémentaires correspondant au premier segment audio et des informations utilisées pour déterminer l'identité d'un locuteur et qui figurent dans les secondes informations supplémentaires correspondant au premier segment audio, l'identité d'un locuteur correspondant au premier segment audio, dans lequel le premier segment audio est l'un de la pluralité de segments audio ; et
la génération, par le dispositif de traitement des informations de conférence (102, 160), d'un enregistrement de conférence, dans lequel l'enregistrement de conférence comprend un énoncé du premier segment audio et l'identité de locuteur correspondant au premier segment audio.

7. Procédé selon l'une quelconque des revendications 1 à 6, dans lequel l'énoncé comprend au moins l'un d'un texte d'énoncé, d'un discours d'énoncé et d'une période de temps d'énoncé.

8. Procédé pour traiter des informations de conférence, appliqué à un système de conférence, dans lequel le système de conférence comprend un terminal de conférence (101, 140, 150) et un dispositif de traitement des informations de conférence (102, 160), et le procédé comprend :
la réception (S304), par le dispositif de traitement des informations de conférence (102, 160), d'un audio de conférence et des premières informations supplémentaires correspondant à une pluralité de segments audio envoyés par le terminal de conférence (101, 140, 150) dans un premier site de conférence, dans lequel l'audio de conférence est enregistré par le terminal de conférence (101, 140, 150) dans un processus de conférence, la pluralité de segments audio sont obtenus en réalisant une segmentation de la parole sur l'audio de conférence ou sont collectés sur la base d'une direction de source sonore dans le premier site de conférence, les premières informations supplémentaires correspondant à chaque segment audio comprennent des informations utilisées pour déterminer l'identité d'un locuteur correspondant au segment audio et des informations d'identification du segment audio correspondant, et les directions de source sonore de deux segments audio adjacents dans une séquence temporelle sont différentes ;
s'il est déterminé qu'une pluralité de locuteurs parlent simultanément dans le segment audio, la réalisation, par le dispositif de traitement des informations de conférence (102, 160), d'une séparation aveugle de la source sur le segment audio pour séparer le segment audio en un ou plusieurs segments audio mono ;
la réalisation, par le dispositif de traitement des informations de conférence (102, 160), de la reconnaissance vocale sur chaque segment audio mono obtenu par séparation aveugle de la source ; la réalisation (S306), par le dispositif de traitement des informations de conférence (102, 160), de la reconnaissance d'empreinte vocale sur la pluralité de segments audio obtenus par segmentation de la parole pour obtenir des secondes informations supplémentaires correspondant à chacun de la pluralité de segments audio, dans lequel les secondes informations supplémentaires correspondant à chaque segment audio comprennent des informations utilisées pour déterminer l'identité d'un locuteur correspondant au segment audio et des informations d'identification du segment audio correspondant ; et
la génération (S307), par le dispositif de traitement des informations de conférence (102, 160), d'une correspondance entre un participant et un énoncé dans le premier site de conférence sur la base des premières informations supplémentaires et des secondes informations supplémentaires.

9. Procédé selon la revendication 8, dans lequel la génération (S307), par le dispositif de traitement des informations de conférence (102, 160), d'une correspondance entre chaque participant et un énoncé dans le premier site de conférence sur la base des premières informations supplémentaires et des secondes informations supplémentaires comprend :
la détermination, par le dispositif de traitement des informations de conférence (102, 160) sur la base des informations utilisées pour déterminer l'identité d'un locuteur et qui figurent dans les premières informations supplémentaires correspondant au premier segment audio et des informations utilisées pour déterminer l'identité d'un locuteur et qui figurent dans les secondes informations supplémentaires correspondant au premier segment audio, l'identité d'un locuteur correspondant au premier segment audio, dans lequel le premier segment audio est l'un de la pluralité de segments audio ; et
la génération, par le dispositif de traitement des informations de conférence (102, 160), d'un enregistrement de conférence, dans lequel l'enregistrement de conférence comprend un énoncé du premier segment audio et l'identité de locuteur correspondant au premier segment audio.

10. Procédé selon l'une quelconque des revendications 8 à 9, dans lequel les premières informations supplémentaires correspondant au premier segment audio comprennent un résultat de reconnaissance faciale et/ou un résultat de reconnaissance d'empreinte vocale du premier segment audio et des informations d'identification du premier segment audio, et le premier segment audio est l'un de la pluralité de segments audio.

11. Dispositif de traitement d'informations de conférence (102, 160), comprenant un processeur (1601), une mémoire (1602) et une interface de communication, dans lequel la mémoire (1602) est configurée pour stocker un programme informatique, et le processeur (1601) invoque le programme informatique pour réaliser les opérations suivantes :
la réception, par l'interface de communication, d'un audio de conférence et des premières informations supplémentaires correspondant à une pluralité de segments audio envoyés par un terminal de conférence (101, 140, 150) dans un premier site de conférence, dans lequel l'audio de conférence est enregistré par le terminal de conférence (101, 140, 150) dans un processus de conférence, la pluralité de segments audio sont obtenus en réalisant une segmentation de la parole sur l'audio de conférence ou sont collectés sur la base d'une direction de source sonore dans le premier site de conférence, les premières informations supplémentaires correspondant à chaque segment audio comprennent des informations utilisées pour déterminer l'identité d'un locuteur correspondant au segment audio et des informations d'identification du segment audio correspondant,
et les directions de source sonore de deux segments audio adjacents dans une séquence temporelle sont différentes ;
le fait de déterminer si une pluralité de locuteurs parlent simultanément dans le segment audio ;
s'il est déterminé qu'une pluralité de locuteurs parlent simultanément dans le segment audio, la réalisation de la séparation aveugle de la source sur le segment audio pour séparer le segment audio en un ou plusieurs segments audio mono ;
la réalisation de la reconnaissance vocale sur chaque segment audio mono obtenu par séparation aveugle de la source ;
la réalisation de la reconnaissance d'empreinte vocale sur la pluralité de segments audio obtenus par segmentation de la parole pour obtenir des secondes informations supplémentaires correspondant à chacun de la pluralité de segments audio, dans lequel les secondes informations supplémentaires correspondant à chaque segment audio comprennent des informations utilisées pour déterminer l'identité d'un locuteur correspondant au segment audio et des informations d'identification du segment audio correspondant ; et
la génération d'une correspondance entre un participant et un énoncé dans le premier site de conférence sur la base des premières informations supplémentaires et des secondes informations supplémentaires.

12. Dispositif selon la revendication 11, dans lequel la génération d'une correspondance entre chaque participant et un énoncé dans le premier site de conférence sur la base des premières informations supplémentaires et des secondes informations supplémentaires, le processeur (1601) est spécifiquement configuré pour :
déterminer, sur la base des informations utilisées pour déterminer l'identité d'un locuteur et qui figurent dans les premières informations supplémentaires correspondant au premier segment audio et des informations utilisées pour déterminer l'identité d'un locuteur et qui figurent dans les secondes informations supplémentaires correspondant au premier segment audio, l'identité d'un locuteur correspondant au premier segment audio, dans lequel le premier segment audio est l'un de la pluralité de segments audio ; et
générer un enregistrement de conférence, dans lequel l'enregistrement de conférence comprend un énoncé du premier segment audio et l'identité de locuteur correspondant au premier segment audio.

13. Système de conférence, comprenant un terminal de conférence (101, 140, 150) et un dispositif de traitement des informations de conférence (102, 160), dans lequel
le terminal de conférence (101, 140, 150) comprend un processeur (1401, 1501), une mémoire (1402, 1502) et une interface de communication (1403, 1503), dans lequel la mémoire (1402, 1502) est configurée pour stocker un programme informatique, et le processeur (1401, 1501) invoque le programme informatique pour réaliser les opérations suivantes :
la collecte d'un segment audio dans un premier site de conférence sur la base d'une direction de source sonore dans un processus de conférence, dans lequel les directions de source sonore de deux segments audio adjacents dans une séquence temporelle sont différentes ;
la génération des premières informations supplémentaires correspondant à chacun d'une pluralité de segments audio collectés, dans lequel les premières informations supplémentaires correspondant à chaque segment audio comprennent des informations utilisées pour déterminer l'identité d'un locuteur correspondant au segment audio et des informations d'identification du segment audio correspondant ; et
l'envoi, à un dispositif de traitement des informations de conférence (102, 160) par l'interface de communication (1403, 1503), d'un audio de conférence enregistré au cours du processus de conférence et de premières informations supplémentaires correspondant à la pluralité de segments audio, dans lequel le dispositif de traitement d'informations de conférence (102, 160) est le dispositif de traitement d'informations de conférence (102, 160) selon l'une quelconque des revendications 11 à 12.
